# EUROPEAN PATENT APPLICATION

(11) **EP 4 447 020 A1**
(43) Date of publication of application: **16.10.2024**
(21) Application number: 22904164.5
(22) Date of filing: 02.12.2022
(51) Int. Cl.: G08G 1/16, B60W 50/02, B60W 50/04, B60W 50/12

(54) **INFORMATION PROCESSING DEVICE, INFORMATION PROCESSING METHOD, AND VEHICLE CONTROL SYSTEM**

(30) Priority: 06.12.2021 JP 2021197543
(71) Applicant: Sony Semiconductor Solutions Corporation, Atsugi-shi, Kanagawa 243-0014 (JP)
(72) Inventor: NAKAYAMA Satoshi, Atsugi-shi, Kanagawa 243-0014 (JP); OWAKI Hirofumi, Atsugi-shi, Kanagawa 243-0014 (JP)
(74) Representative: Witte, Weller & Partner Patentanwälte mbB
(86) International application number: PCT/JP2022/044577
(87) International publication number: WO 2023/106235

(57) **Abstract**

The present technology relates to an information processing device, an information processing method, and a vehicle control system that enable more suitable continuation of automated driving.

A driving control unit is configured to control automated driving of a vehicle, a state determination unit is configured to determine, on the basis of state information indicating a state of a system for the automated driving, whether or not the system is in a preliminary state where there is a high probability that an abnormality will occur in the system, and a level determination unit is configured to determine whether to shift or maintain an automated driving level on the basis of a response from a driver in a case where the system is determined to be in the preliminary state. The present technology is applicable to, for example, an image recognition chip that performs object recognition for automated driving.

## Description

### TECHNICAL FIELD

The present technology relates to an information processing device, an information processing method, and a vehicle control system, and more particularly, to an information processing device, an information processing method, and a vehicle control system that enable more suitable continuation of automated driving.

### BACKGROUND ART

Patent Document 1 discloses an automated driving control device that restricts an automated driving control feature or restricts a non-automated driving feature to maintain power supply for automated driving control in a case where a battery temperature detector does not operate correctly.

### CITATION LIST

### PATENT DOCUMENT

Patent Document 1: Japanese Patent Application Laid-Open No. 2018-181475

### SUMMARY OF THE INVENTION

### PROBLEMS TO BE SOLVED BY THE INVENTION

In vehicle automated driving, there has been a possibility that the occurrence of an abnormality in a system (device) for the automated driving, such as thermal runaway due to heat generated by an image recognition chip, affects continuation of the automated driving.

The present technology has been made in view of such circumstances, and it is therefore an object of the present technology to enable more suitable continuation of automated driving.

### SOLUTIONS TO PROBLEMS

An information processing device according to the present technology includes: a driving control unit configured to control automated driving of a vehicle; a state determination unit configured to determine, on the basis of state information indicating a state of a system for the automated driving, whether or not the system is in a preliminary state where there is a high probability that an abnormality will occur in the system; and a level determination unit configured to determine whether to shift or maintain an automated driving level on the basis of a response from a driver in a case where the system is determined to be in the preliminary state.

An information processing method according to the present technology includes: by an information processing device, determining, on the basis of state information indicating a state of a system for automated driving of a vehicle, whether or not the system is in a preliminary state where there is a high probability that an abnormality will occur in the system; and determining whether to shift or maintain an automated driving level on the basis of a response from a driver in a case where the system is determined to be in the preliminary state.

A vehicle control system according to the present technology includes: a camera mounted on a vehicle; a driving control unit configured to control automated driving of the vehicle; a state determination unit configured to determine, on the basis of state information indicating a state of a system for the automated driving, whether or not the system is in a preliminary state where there is a high probability that an abnormality will occur in the system; and a level determination unit configured to determine to shift or maintain an automated driving level on the basis of a response from a driver in a case where the system is determined to be in the preliminary state.

According to the present technology, on the basis of state information indicating a state of a system for automated driving of a vehicle, a determination as to whether or not the system is in a preliminary state where there is a high probability that an abnormality will occur in the system is made, and in a case where the system is determined to be in the preliminary state, a determination as to whether to shift or maintain an automated driving level is made on the basis of a response from a driver.

### BRIEF DESCRIPTION OF DRAWINGS

Fig. 1 is a block diagram illustrating a configuration example of a vehicle control system.
Fig. 2 is a diagram illustrating examples of a sensing area.
Fig. 3 is a block diagram illustrating a functional configuration example of a vehicle control system to which the present technology is applied.
Fig. 4 is a flowchart for describing an outline of an operation of the vehicle control system.
Fig. 5 is a diagram for describing a relationship between an operation mode and an automated driving level.
Fig. 6 is a diagram for describing a relationship between a temperature of a chip and the automated driving level.
Fig. 7 is a flowchart for describing an operation in a priority mode higher than or equal to a level 4.
Fig. 8 is a flowchart for describing the operation in the priority mode higher than or equal to the level 4.
Fig. 9 is a diagram for describing a normal recognition frame rate.
Fig. 10 is a diagram for describing a recognition frame rate under a reduced load.
Fig. 11 is a flowchart for describing an outline of an operation of the vehicle control system.
Fig. 12 is a diagram for describing another example of the automated driving level and mode transition.
Fig. 13 is a flowchart for describing a flow of how a vehicle operates during an avoidance maneuver.
Fig. 14 is a flowchart for describing a flow of how the vehicle operates during the avoidance maneuver.
Fig. 15 is a diagram for describing an outline of an image pyramid.
Fig. 16 is a diagram for describing an outline of the image pyramid.
Fig. 17 is a block diagram illustrating a first configuration example of a detection processing unit.
Fig. 18 is a flowchart for describing a flow of recognition processing.
Fig. 19 is a block diagram illustrating a second configuration example of the detection processing unit.
Fig. 20 is a flowchart for describing a flow of recognition processing.
Fig. 21 is a block diagram illustrating a configuration example of a computer.

### MODE FOR CARRYING OUT THE INVENTION

A mode for carrying out the present technology (hereinafter referred to as embodiment) will be described below. Note that the description will be given in the following order.

1. Configuration example of vehicle control system
2. Problems in automated driving in related art
3. Configuration and outline of operation of vehicle control system according to present technology
4. Details of operation of vehicle control system
5. Modifications and specific examples
6. Configuration example of computer

### <1. Configuration example of vehicle control system>

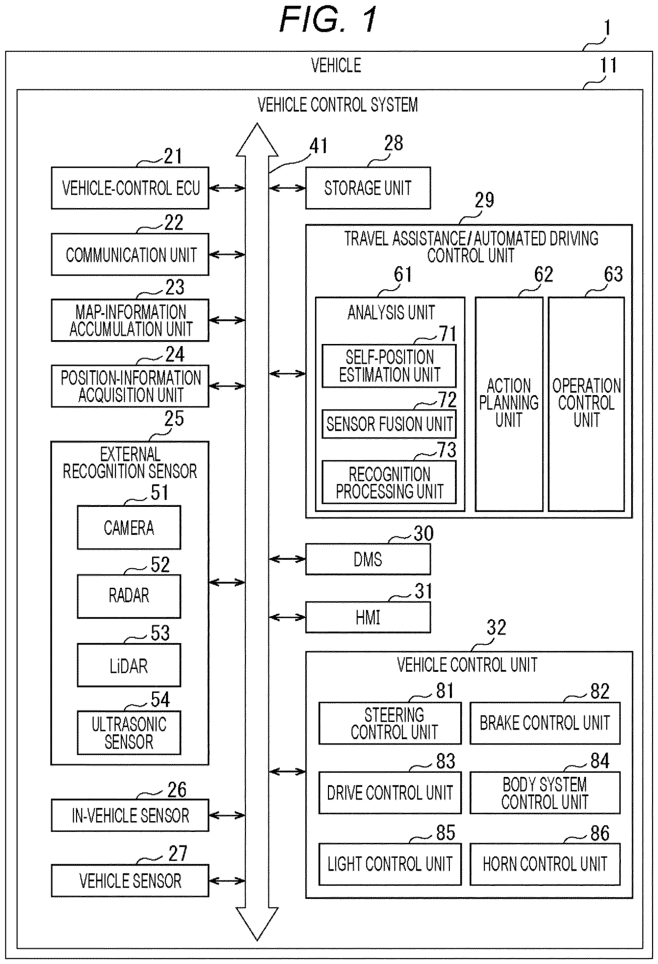

Fig. 1 is a block diagram illustrating a configuration example of a vehicle control system 11 that is an example of a mobile device control system to which the present technology is applied.

The vehicle control system 11 is provided in a vehicle 1 and performs processing related to travel assistance and automated driving of the vehicle 1.

The vehicle control system 11 includes a vehicle control electronic control unit (ECU) 21, a communication unit 22, a map-information accumulation unit 23, a position-information acquisition unit 24, an external recognition sensor 25, an in-vehicle sensor 26, a vehicle sensor 27, a storage unit 28, a travel assistance/automated driving control unit 29, a driver monitoring system (DMS) 30, a human machine interface (HMI) 31, and a vehicle control unit 32.

The vehicle control ECU 21, the communication unit 22, the map-information accumulation unit 23, the position-information acquisition unit 24, the external recognition sensor 25, the in-vehicle sensor 26, the vehicle sensor 27, the storage unit 28, the travel assistance/automated driving control unit 29, the driver monitoring system (DMS) 30, the human machine interface (HMI) 31, and the vehicle control unit 32 are communicatively connected to each other via a communication network 41. The communication network 41 includes, for example, an in-vehicle communication network, a bus, or the like that conforms to a digital bidirectional communication standard such as a controller area network (CAN), a local interconnect network (LIN), a local area network (LAN), FlexRay (registered trademark), or Ethernet (registered trademark). The communication network 41 may be selectively used depending on the type of data to be transmitted. For example, the CAN may be applied to data related to vehicle control, and the Ethernet may be applied to large-volume data. Note that units of the vehicle control system 11 may be directly connected to each other using wireless communication adapted to a relatively short-range communication, such as near field communication (NFC) or Bluetooth (registered trademark) without using the communication network 41.

Note that, hereinafter, in a case where each unit of the vehicle control system 11 performs communication via the communication network 41, the description of the communication network 41 will be omitted. For example, in a case where the vehicle control ECU 21 and the communication unit 22 perform communication via the communication network 41, it will be simply described that the vehicle control ECU 21 and the communication unit 22 perform communication.

For example, the vehicle control ECU 21 includes various processors such as a central processing unit (CPU) and a micro processing unit (MPU). The vehicle control ECU 21 controls all or some of the features of the vehicle control system 11.

The communication unit 22 communicates with various devices inside and outside the vehicle, another vehicle, a server, a base station, and the like, and transmits and receives various types of data. At this time, the communication unit 22 can perform communication using a plurality of communication systems.

Communication with the outside of the vehicle executable by the communication unit 22 will be schematically described. The communication unit 22 communicates with a server (hereinafter, referred to as external server) or the like present on an external network via a base station or an access point by means of, for example, a wireless communication system such as fifth generation mobile communication system (5G), long term evolution (LTE), or dedicated short range communications (DSRC). Examples of the external network over which the communication unit 22 performs communication include the Internet, a cloud network, a company-specific network, and the like. The communication system by means of which the communication unit 22 performs communication over the external network is not particularly limited as long as it is a wireless communication system allowing digital bidirectional communication at a communication speed equal to or higher than a predetermined speed and over a distance equal to or longer than a predetermined distance.

Furthermore, for example, the communication unit 22 can communicate with a terminal present in the vicinity of a host vehicle using a peer to peer (P2P) technology. The terminal present in the vicinity of the host vehicle is, for example, a terminal attached to a moving object moving at a relatively low speed such as a pedestrian or a bicycle, a terminal fixedly installed in a store or the like, or a machine type communication (MTC) terminal. Moreover, the communication unit 22 can also perform V2X communication. The V2X communication refers to, for example, communication between the host vehicle and another vehicle, such as vehicle to vehicle communication with another vehicle, vehicle to infrastructure communication with a roadside device or the like, vehicle to home communication, and vehicle to pedestrian communication with a terminal or the like carried by a pedestrian.

For example, the communication unit 22 can receive a program for updating software for controlling the operation of the vehicle control system 11 from the outside (Over The Air). The communication unit 22 can further receive map information, traffic information, information regarding the surroundings of the vehicle 1, and the like from the outside. Furthermore, for example, the communication unit 22 can transmit information regarding the vehicle 1, information regarding the surroundings of the vehicle 1, and the like to the outside. Examples of the information regarding the vehicle 1 transmitted to the outside by the communication unit 22 include data indicating a state of the vehicle 1, a recognition result from the recognition processing unit 73, and the like. Moreover, for example, the communication unit 22 performs communication adapted to a vehicle emergency call system such as an eCall.

For example, the communication unit 22 receives an electromagnetic wave transmitted by the vehicle information and communication system (VICS) (registered trademark) with a radio wave beacon, an optical beacon, frequency modulation (FM) multiplex broadcasting, or the like.

Communication with the inside of the vehicle executable by the communication unit 22 will be schematically described. The communication unit 22 can communicate with each device in the vehicle, using, for example, wireless communication. The communication unit 22 can perform wireless communication with a device in the vehicle by means of, for example, a communication system allowing digital bidirectional communication at a communication speed equal to or higher than a predetermined speed by wireless communication, such as wireless LAN, Bluetooth, NFC, or wireless universal serial bus (WUSB). The communication unit 22 can communicate with each device in the vehicle using not only wireless communication but also wired communication. For example, the communication unit 22 can communicate with each device in the vehicle by wired communication via a cable connected to a connection terminal (not illustrated). The communication unit 22 can communicate with each device in the vehicle by means of, for example, a communication system allowing digital bidirectional communication at a communication speed equal to or higher than a predetermined speed by wired communication, such as universal serial bus (USB), high-definition multimedia interface (HDMI) (registered trademark), or mobile high-definition link (MHL).

Here, the device in the vehicle refers to, for example, a device that is not connected to the communication network 41 in the vehicle. Possible examples of the device in the vehicle include a mobile device and a wearable device carried by an occupant such as a driver, an information device brought into the vehicle and temporarily installed, and the like.

The map-information accumulation unit 23 accumulates either or both of a map acquired from the outside and a map created by the vehicle 1. For example, the map-information accumulation unit 23 accumulates a three-dimensional high-precision map, a global map lower in precision than the high-precision map but covering a wider area, and the like.

Examples of the high-precision map include a dynamic map, a point cloud map, a vector map, and the like. The dynamic map is, for example, a map including four layers of dynamic information, quasi-dynamic information, quasi-static information, and static information and is provided to the vehicle 1 from the external server or the like. The point cloud map is a map including point clouds (point cloud data). The vector map is, for example, a map obtained by associating traffic information such as a position of a lane and a position of a traffic light with the point cloud map and adapting the associated point cloud map to the advanced driver assistance system (ADAS) or autonomous driving/automated driving (AD).

The point cloud map and the vector map may be provided from, for example, the external server or the like, or may be created by the vehicle 1 as a map used for matching with a local map to be described later on the basis of a sensing result from a camera 51, a radar 52, a light detection and ranging or laser imaging detection and ranging (LiDAR) 53, or the like, and may be accumulated in the map-information accumulation unit 23. Furthermore, in a case where the high-precision map is provided from the external server or the like, for example, map data of several hundred meters square regarding a planned path on which the vehicle 1 is to travel from now is acquired from the external server or the like in order to reduce the communication volume.

The position-information acquisition unit 24 receives a global navigation satellite system (GNSS) signal from a GNSS satellite and acquires position information regarding the vehicle 1. The acquired position information is supplied to the travel assistance/automated driving control unit 29. Note that the position-information acquisition unit 24 may acquire the position information by means of not only a system using the GNSS signal, but also a beacon, for example.

The external recognition sensor 25 includes various sensors used to recognize a situation outside the vehicle 1, and supplies sensor data from each sensor to each unit of the vehicle control system 11. The type and number of sensors included in the external recognition sensor 25 may be determined as desired.

For example, the external recognition sensor 25 includes the camera 51, the radar 52, the light detection and ranging, the laser imaging detection and ranging (LiDAR) 53, and an ultrasonic sensor 54. Alternatively, the external recognition sensor 25 is only required to include at least one of the camera 51, the radar 52, the LiDAR 53, or the ultrasonic sensor 54. The number of cameras 51, the number of radars 52, the number of LiDARs 53, and the number of ultrasonic sensors 54 are not particularly limited as long as they can be practically installed in the vehicle 1. Furthermore, the types of sensors included in the external recognition sensor 25 are not limited to this example, and the external recognition sensor 25 may include sensors of other types. An example of a sensing area of each sensor included in the external recognition sensor 25 will be described later.

Note that an imaging method of the camera 51 is not particularly limited. For example, cameras of various imaging methods capable of measuring a distance, such as a time of flight (ToF) camera, a stereo camera, a monocular camera, and an infrared camera can be applied to the camera 51 as necessary. Alternatively, the camera 51 may simply acquire a captured image regardless of distance measurement.

Furthermore, for example, the external recognition sensor 25 can include an environment sensor for detecting an environment of the vehicle 1. The environment sensor is a sensor for detecting an environment such as weather, climate, and brightness and can include various sensors such as a raindrop sensor, a fog sensor, a sunshine sensor, a snow sensor, and an illuminance sensor, for example.

Moreover, for example, the external recognition sensor 25 includes a microphone used to detect a sound around the vehicle 1, a position of a sound source, and the like.

The in-vehicle sensor 26 includes various sensors for detecting information regarding the inside of the vehicle, and supplies sensor data from each sensor to each unit of the vehicle control system 11. The types and number of various sensors included in the in-vehicle sensor 26 are not particularly limited as long as they can be practically installed in the vehicle 1.

For example, the in-vehicle sensor 26 can include one or more sensors of a camera, a radar, a seating sensor, a steering wheel sensor, a microphone, and a biometric sensor. As the camera included in the in-vehicle sensor 26, for example, cameras of various imaging methods capable of measuring a distance, such as a ToF camera, a stereo camera, a monocular camera, and an infrared camera, can be used. Alternatively, the camera included in the in-vehicle sensor 26 may simply acquire a captured image regardless of distance measurement. The biometric sensor included in the in-vehicle sensor 26 is provided, for example, on a seat, a steering wheel, or the like and detects various sorts of biometric information regarding an occupant such as a driver.

The vehicle sensor 27 includes various sensors for detecting the state of the vehicle 1 and supplies sensor data from each sensor to each unit of the vehicle control system 11. The types and number of various sensors included in the vehicle sensor 27 are not particularly limited as long as they can be practically installed in the vehicle 1.

For example, the vehicle sensor 27 includes a speed sensor, an acceleration sensor, an angular velocity sensor (gyro sensor), and an inertial measurement unit (IMU) obtained by integrating these sensors. For example, the vehicle sensor 27 includes a steering angle sensor that detects a steering angle of a steering wheel, a yaw rate sensor, an accelerator sensor that detects an operation amount of an accelerator pedal, and a brake sensor that detects an operation amount of a brake pedal. For example, the vehicle sensor 27 includes a rotation sensor that detects an engine speed or a motor speed, a pneumatic sensor that detects a tire pressure, a slip rate sensor that detects a tire slip rate, and a wheel speed sensor that detects a wheel speed. For example, the vehicle sensor 27 includes a battery sensor that detects the state of charge and temperature of a battery, and an impact sensor that detects an external impact.

The storage unit 28 includes at least one of a non-volatile storage medium or a volatile storage medium, and stores data and a program. The storage unit 28 is used as, for example, an electrically erasable programmable read only memory (EEPROM) and a random access memory (RAM), and a magnetic storage device such as a hard disc drive (HDD), a semiconductor storage device, an optical storage device, and a magneto-optical storage device can be applied as the storage medium. The storage unit 28 stores therein various programs and data used by each unit of the vehicle control system 11. For example, the storage unit 28 includes an event data recorder (EDR) or a data storage system for automated driving (DSSAD) and stores information regarding the vehicle 1 before and after an event such as an accident and information acquired by the in-vehicle sensor 26.

The travel assistance/automated driving control unit 29 controls travel assistance and automated driving of the vehicle 1. For example, the travel assistance/automated driving control unit 29 includes an analysis unit 61, an action planning unit 62, and an operation control unit 63.

The analysis unit 61 performs analysis processing on the vehicle 1 and surroundings of the vehicle 1. The analysis unit 61 includes a self-position estimation unit 71, a sensor fusion unit 72, and the recognition processing unit 73.

The self-position estimation unit 71 estimates a self-position of the vehicle 1, on the basis of the sensor data from the external recognition sensor 25 and the high-precision map accumulated in the map-information accumulation unit 23. For example, the self-position estimation unit 71 generates a local map on the basis of the sensor data from the external recognition sensor 25, and estimates the self-position of the vehicle 1 by matching the local map with the high-precision map. The position of the vehicle 1 is based on, for example, a center of a rear axle.

The local map is, for example, a three-dimensional high-precision map created using a technology such as simultaneous localization and mapping (SLAM), an occupancy grid map, or the like. Examples of the three-dimensional high-precision map include the above-described point cloud map and the like. The occupancy grid map is a map in which a three-dimensional or two-dimensional space around the vehicle 1 is divided into grids (lattices) of a predetermined size, and an occupancy state of an object is represented in units of grids. The occupancy state of the object is represented by, for example, presence or absence or an existence probability of the object. The local map is also used for processing of detecting and recognizing the situation outside the vehicle 1 performed by the recognition processing unit 73, for example.

Note that, the self-position estimation unit 71 may estimate the self-position of the vehicle 1 on the basis of the position information acquired by the position-information acquisition unit 24 and the sensor data from the vehicle sensor 27.

The sensor fusion unit 72 performs sensor fusion processing of combining a plurality of different types of sensor data (for example, image data supplied from camera 51 and sensor data supplied from radar 52) to acquire new information. Methods for combining different types of sensor data include integration, fusion, association, and the like.

The recognition processing unit 73 performs the detection processing of detecting the situation outside the vehicle 1 and the recognition processing of recognizing the situation outside the vehicle 1.

For example, the recognition processing unit 73 performs the detection processing and the recognition processing on the situation outside the vehicle 1, on the basis of the information from the external recognition sensor 25, the information from the self-position estimation unit 71, the information from the sensor fusion unit 72, or the like.

Specifically, for example, the recognition processing unit 73 performs detection processing of detecting an object around the vehicle 1, recognition processing of recognizing the object, and the like. The object detection processing is, for example, processing of detecting presence or absence, a size, a shape, a position, a motion, and the like of an object. The object recognition processing is, for example, processing of recognizing an attribute such as a type of an object or identifying a specific object. The detection processing and the recognition processing, however, are not necessarily clearly separated and may overlap.

For example, the recognition processing unit 73 detects an object around the vehicle 1 by performing clustering to classify point clouds based on sensor data from the radar 52, the LiDAR 53, or the like into clusters of point clouds. As a result, the presence or absence, a size, a shape, and a position of the object around the vehicle 1 are detected.

For example, the recognition processing unit 73 detects a motion of the object around the vehicle 1 by tracking a motion of each cluster of point clouds classified by clustering. As a result, a speed and a traveling direction (movement vector) of the object around the vehicle 1 are detected.

For example, the recognition processing unit 73 detects or recognizes a vehicle, a person, a bicycle, an obstacle, a structure, a road, a traffic light, a traffic sign, a road sign, and the like on the basis of the image data supplied from the camera 51. Furthermore, the recognition processing unit 73 may recognize the type of the object around the vehicle 1 by performing recognition processing such as semantic segmentation.

For example, the recognition processing unit 73 can perform processing of recognizing traffic rules around the vehicle 1 on the basis of the map accumulated in the map-information accumulation unit 23, the estimation result of the self-position by the self-position estimation unit 71, and the recognition result of the object around the vehicle 1 by the recognition processing unit 73. Through this processing, the recognition processing unit 73 can recognize the position and state of the traffic light, the content of the traffic sign and the road sign, the content of traffic regulations, the travelable lane, and the like.

For example, the recognition processing unit 73 can perform recognition processing of recognizing a surrounding environment of the vehicle 1. Possible examples of the surrounding environment to be recognized by the recognition processing unit 73 include weather, temperature, humidity, brightness, road surface conditions, and the like.

The action planning unit 62 creates an action plan of the vehicle 1. For example, the action planning unit 62 creates the action plan by performing global path planning and path following processing.

Note that the global path planning is processing of planning a rough path from a start to a goal. This global path planning further includes processing, called a local path planning, of generating, within the planned path, a local path in the vicinity of the vehicle 1 that allows the vehicle 1 to travel safely and smoothly in consideration of the motion characteristics of the vehicle 1.

The path following is processing of planning an operation for safe and accurate travel along a path planned by means of the global path planning within a planned time. For example, the action planning unit 62 can calculate a target speed and a target angular velocity of the vehicle 1 on the basis of a result of this path following processing.

The operation control unit 63 controls the operation of the vehicle 1 in order to achieve the action plan created by the action planning unit 62.

For example, the operation control unit 63 controls a steering control unit 81, a brake control unit 82, and a drive control unit 83 included in the vehicle control unit 32 to be described later, to control acceleration/deceleration and a direction so as to allow the vehicle 1 to travel on a path calculated by means of the local path planning. For example, the operation control unit 63 performs coordinated control for the purpose of enabling the ADAS features such as collision avoidance or impact mitigation, follow-up traveling, vehicle-speed maintaining traveling, warning of collision of the host vehicle, warning of lane departure of the host vehicle, and the like. For example, the operation control unit 63 performs coordinated control for the purpose of automated driving or the like in which a vehicle autonomously travels without depending on a driver's operation.

The DMS 30 performs processing of authenticating the driver, processing of recognizing a state of the driver, and the like, on the basis of the sensor data from the in-vehicle sensor 26, the input data input to the HMI 31 to be described later, or the like. Possible examples of the state of the driver to be recognized include a physical condition, an alertness level, a concentration level, a fatigue level, a line-of-sight direction, a drunkenness level, a driving operation, a posture, and the like.

Note that the DMS 30 may perform processing of authenticating an occupant other than the driver, and processing of recognition a state of the occupant. Furthermore, for example, the DMS 30 may perform processing of recognizing a situation inside the vehicle on the basis of sensor data from the in-vehicle sensor 26. Possible examples of the situation inside the vehicle to be recognized include temperature, humidity, brightness, odor, and the like.

The HMI 31 receives various data, instructions, and the like, and presents various data to the driver and the like.

The input of data by means of the HMI 31 will be schematically described. The HMI 31 includes an input device for a person to input data. The HMI 31 generates an input signal on the basis of data, an instruction, or the like input by the input device, and supplies the input signal to each unit of the vehicle control system 11. The HMI 31 includes, for example, an operator such as a touch panel, a button, a switch, or a lever as the input device. The HMI 31 may further include an input device that enables input of information by a method such as voice or gesture other than manual operation. Moreover, the HMI 31 may use, for example, a remote control device using infrared rays or radio waves, or an external connection device such as a mobile device or a wearable device adapted to the operation of the vehicle control system 11 as an input device.

How the HMI 31 presents data will be schematically described. The HMI 31 generates visual information, auditory information, and haptic information for the occupant or the outside of the vehicle. Furthermore, the HMI 31 performs output control for controlling the output, output content, output timing, output method, and the like of each piece of generated information. The HMI 31 generates and outputs, as the visual information, information represented by an image or light such as an operation screen, a state display of the vehicle 1, a warning display, a monitor image representing the surroundings of the vehicle 1, or the like. Furthermore, the HMI 31 generates and outputs, as the auditory information, information represented by sounds such as voice guidance, a warning sound, or a warning message. Moreover, the HMI 31 generates and outputs, as the haptic information, information given to the tactile sense of the occupant by force, vibration, motion, or the like, for example.

As an output device with which the HMI 31 outputs the visual information, for example, a display device that presents the visual information by displaying an image by itself or a projector device that presents the visual information by projecting an image can be applied. Note that the display device may be a device that displays the visual information in the field of view of the occupant, such as a head-up display, a transmissive display, or a wearable device having an augmented reality (AR) function, as well as a display device having a normal display. Furthermore, the HMI 31 can use, as the output device that outputs the visual information, a display device included in a navigation device, an instrument panel, a camera monitoring system (CMS), an electronic mirror, a lamp, or the like provided in the vehicle 1.

As the output device with which the HMI 31 outputs the auditory information, for example, an audio speaker, headphones, or earphones can be applied.

As an output device with which the HMI 31 outputs the haptic information, for example, a haptic element using a haptic technology can be applied. The haptic element is provided, for example, at a portion with which the occupant of the vehicle 1 comes into contact, such as a steering wheel or a seat.

The vehicle control unit 32 controls each unit of the vehicle 1. The vehicle control unit 32 includes the steering control unit 81, the brake control unit 82, the drive control unit 83, a body system control unit 84, a light control unit 85, and a horn control unit 86.

The steering control unit 81 performs detection of a state of a steering system of the vehicle 1, control of the steering system of the vehicle 1, and the like. The steering system includes, for example, a steering mechanism including a steering wheel and the like, an electric power steering, and the like. The steering control unit 81 includes, for example, a steering ECU that controls the steering system, an actuator that drives the steering system, and the like.

The brake control unit 82 performs detection of a state of a brake system of the vehicle 1, control of the brake system of the vehicle 1, and the like. The brake system includes, for example, a brake mechanism including a brake pedal and the like, an antilock brake system (ABS), a regenerative brake mechanism, and the like. The brake control unit 82 includes, for example, a brake ECU that controls the brake system, an actuator that drives the brake system, and the like.

The drive control unit 83 performs detection of a state of a drive system of the vehicle 1, control of the drive system of the vehicle 1, and the like. The drive system includes, for example, an accelerator pedal, a driving force generation device for generating a driving force such as an internal combustion engine or a driving motor, a driving force transmission mechanism for transmitting the driving force to wheels, and the like. The drive control unit 83 includes, for example, a drive ECU that controls the drive system, an actuator that drives the drive system, and the like.

The body system control unit 84 performs detection of a state of a body system of the vehicle 1, control of the body system of the vehicle 1, and the like. The body system includes, for example, a keyless entry system, a smart key system, a power window device, a power seat, an air conditioner, an airbag, a seat belt, a gear shift, and the like. The body system control unit 84 includes, for example, a body system ECU that controls the body system, an actuator that drives the body system, and the like.

The light control unit 85 performs detection of states of various lights of the vehicle 1, control of the various lights of the vehicle 1, and the like. Possible examples of the lights to be controlled include a headlight, a backlight, a fog light, a turn signal, a brake light, a projection light, a bumper indicator, and the like. The light control unit 85 includes a light ECU that controls the lights, an actuator that drives the lights, and the like.

The horn control unit 86 performs detection of a state of a car horn of the vehicle 1, control the car horn of the vehicle 1, and the like. The horn control unit 86 includes, for example, a horn ECU that controls the car horn, an actuator that drives the car horn, and the like.

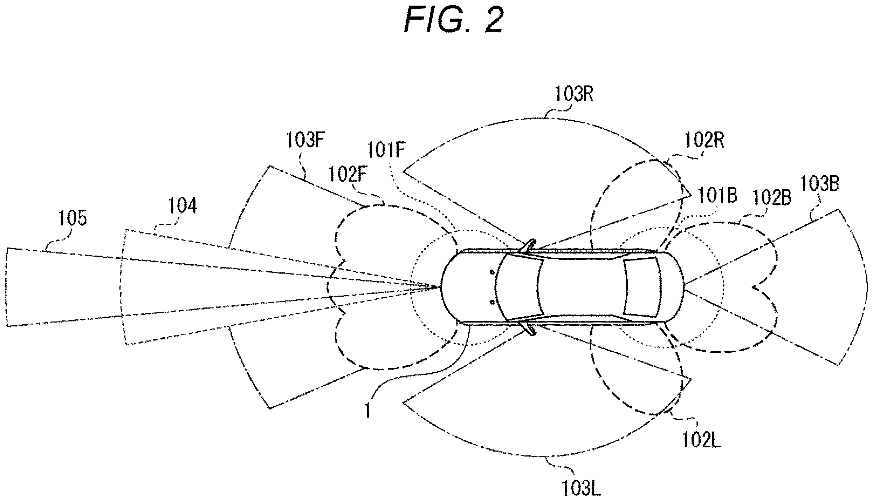

Fig. 2 is a diagram illustrating examples of sensing areas of the camera 51, the radar 52, the LiDAR 53, the ultrasonic sensor 54, and the like of the external recognition sensor 25 in Fig. 1. Note that Fig. 2 schematically illustrates the vehicle 1 as viewed from above, where a left end side is the front end (front) side of the vehicle 1 and a right end side is the rear end (rear) side of the vehicle 1.

Sensing areas 101F and 101B illustrate examples of the sensing area of the ultrasonic sensor 54. The sensing area 101F covers an area around the front end of the vehicle 1 with a plurality of the ultrasonic sensors 54. The sensing area 101B covers an area near the rear end of the vehicle 1 with a plurality of the ultrasonic sensors 54.

Sensing results in the sensing areas 101F and 101B are used for, for example, parking assistance of the vehicle 1 or the like.

Sensing areas 102F to 102B illustrate examples of sensing areas of the radar 52 for a short range or a medium range. The sensing area 102F covers an area extending to a position farther than the sensing area 101F ahead of the vehicle 1. The sensing area 102B covers an area extending to a position farther than the sensing area 101B behind the vehicle 1. The sensing area 102L covers an area around the rear-left side of the vehicle 1. The sensing area 102R covers an area around the rear-right side of the vehicle 1.

A sensing result in the sensing area 102F is used for, for example, detection of a vehicle, a pedestrian, or the like present ahead of the vehicle 1, and the like. A sensing result in the sensing area 102B is used for, for example, a function of preventing a collision of the rear side of the vehicle 1, and the like. Sensing results in the sensing areas 102L and 102R are used for, for example, detection of an object in a blind spot on the sides of the vehicle 1, and the like.

Sensing areas 103F to 103B illustrate examples of sensing areas of the camera 51. The sensing area 103F covers an area extending to a position farther than the sensing area 102F ahead of the vehicle 1. The sensing area 103B covers an area extending to a position farther than the sensing area 102B behind the vehicle 1. The sensing area 103L covers an area around the left side of the vehicle 1. The sensing area 103R covers an area around the right side of the vehicle 1.

A sensing result in the sensing area 103F can be used for, for example, recognition of a traffic light or a traffic sign, a lane departure prevention assist system, and an automatic headlight control system. A sensing result in the sensing area 103B can be used for, for example, parking assistance, a surround view system, and the like. Sensing results in the sensing areas 103L and 103R can be used for, for example, a surround view system.

A sensing area 104 illustrates an example of a sensing area of the LiDAR 53. The sensing area 104 covers an area extending to a position farther than the sensing area 103F ahead of the vehicle 1. On the other hand, the sensing area 104 is narrower than the sensing area 103F in a left-right direction.

A sensing result in the sensing area 104 is used for, for example, detection of an object such as a nearby vehicle.

A sensing area 105 illustrates an example of a sensing area of the radar 52 for a long range. The sensing area 105 covers an area extending to a position farther than the sensing area 104 ahead of the vehicle 1. On the other hand, the sensing area 105 is narrower than the sensing area 104 in the left-right direction.

A sensing result in the sensing area 105 is used for, for example, adaptive cruise control (ACC), emergency braking, collision avoidance, and the like.

Note that the respective sensing areas of the sensors: the camera 51; the radar 52; the LiDAR 53; and the ultrasonic sensor 54, included in the external recognition sensor 25 may have various configurations other than those in Fig. 2. Specifically, the ultrasonic sensor 54 may also perform sensing on the sides of the vehicle 1, or the LiDAR 53 may perform sensing on the rear side of the vehicle 1. Furthermore, an installation position of each sensor is not limited to each example described above. Furthermore, the number of each sensor may be one or more.

### <2. Problems in automated driving in related art>

In vehicle automated driving, along with an increase in functionality of an in-vehicle camera for sensing and the like, countermeasures against heat are becoming increasingly important for a system (device) for the automated driving such as an image recognition chip. The higher the load on the device, the higher the power consumption of the device, so that there is a possibility that the system is brought into malfunction due to thermal runaway caused by inadequate heat removal.

In the system in the related art, measures such as disabling all processing functions are taken in order to avoid thermal runaway, but it is not desirable to disable a processing function for sensing, for example, as automated driving becomes more widespread.

As described above, in the vehicle automated driving, there has been a possibility that the occurrence of an abnormality in the system (device) for the automated driving affects the continuation of the automated driving.

Therefore, in a vehicle control system to which the present technology is applied, in a case where the occurrence of an abnormality in a system for automated driving is predicted, a determination as to whether to shift or maintain an automated driving level is made on the basis of the response from the driver.

The automated driving level is defined as follows.
·Level 1: driver assistance (system performs either steering or acceleration vehicle control)
·Level 2: automated driving feature/partial driving automation under specific conditions (system performs subtasks of both longitudinal and lateral vehicle motion control in a limited area)
·Level 3: conditional automated driving/conditional driving automation (system performs all driving tasks in a limited area, but it is necessary for the driver to appropriately respond to the intervention request from the system)
·Level 4: Full automated driving/high driving automation under specific conditions (system performs all driving tasks under specific conditions)
·Level 5: Full automated driving/full driving automation (system performs all driving tasks under all conditions)

For example, in a case where the temperature of the chip for the recognition processing approaches a high temperature, the driver is urged to make a shift to a lower automated driving level. In a case where the driver does not accept the shift of the automated driving level, a restriction such as reducing the load of the recognition processing to reduce the power consumption or decelerating the vehicle is imposed, thereby allowing the automated driving level to be maintained. When the temperature of the chip decreases to a certain temperature, a return to the automated driving level before the shift is made or the restriction is lifted. It is therefore possible to achieve more suitable continuation of the automated driving.

### <3. Configuration and outline of operation of vehicle control system according to present technology>

Hereinafter, a configuration that enables more suitable continuation of the automated driving will be described.

### (Functional configuration example of vehicle control system)

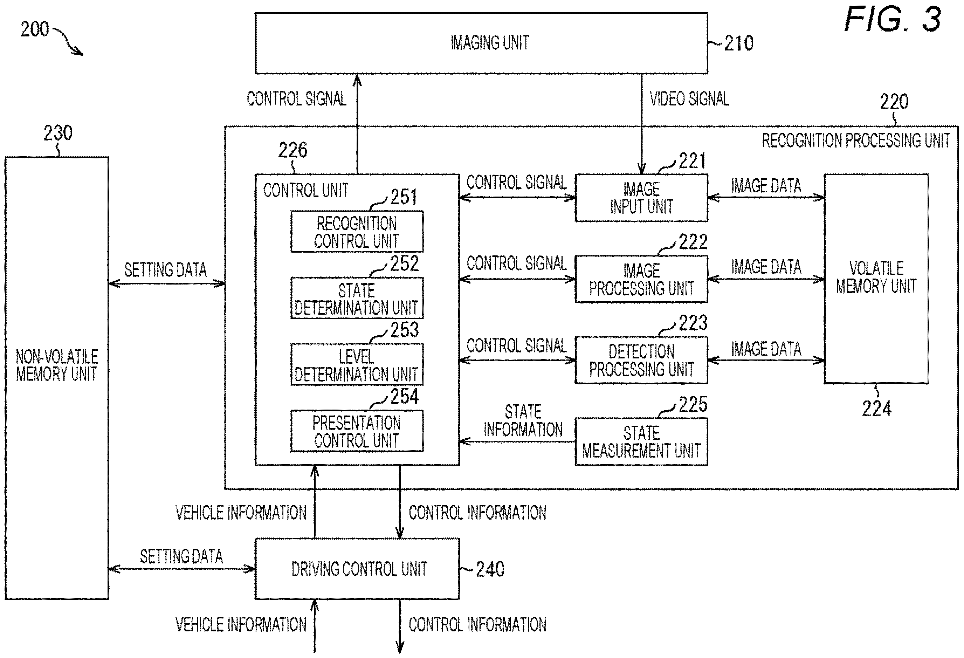

Fig. 3 is a block diagram illustrating a functional configuration example of the vehicle control system to which the present technology is applied.

A vehicle control system 200 in Fig. 3 has a function of performing processing for object recognition in the vehicle control system 11 and processing for automated driving of the vehicle 1 in Fig. 1. The vehicle control system 200 includes an imaging unit 210, a recognition processing unit 220, a non-volatile memory unit 230, and a driving control unit 240.

The imaging unit 210 corresponds to the camera 51 of the vehicle control system 11 in Fig. 1. The imaging unit 210 is configured as an in-vehicle camera mounted on the vehicle 1. Specifically, the imaging unit 210 is attached to the windshield and is configured as a front camera that captures an image of the front of the vehicle 1. The imaging unit 210 captures an image with the front of the vehicle 1 as an imaging range on the basis of a control signal from the recognition processing unit 220, and supplies a corresponding video signal to the recognition processing unit 220.

The recognition processing unit 220 corresponds to the recognition processing unit 73 of the vehicle control system 11 in Fig. 1, and is implemented by, for example, one image recognition chip (device). The recognition processing unit 220 performs recognition processing of detecting and recognizing an object appearing in an image captured by the imaging unit 210 configured as the front camera. The recognition processing unit 220 may be provided inside the camera 51 serving as the imaging unit 210 or may be provided inside a sensor included in the camera 51.

Note that the following description will be given on the assumption that the recognition target of the recognition processing unit 220 is a pedestrian present around the vehicle 1, but the recognition target is not limited to the pedestrian, and may be any object such as another vehicle, a bicycle, an obstacle, a structure, a road, a traffic light, a traffic sign, or a road sign. Furthermore, a range in which such recognition targets are present may be not only a place around the vehicle 1 but also any place outside the vehicle 1.

The recognition processing unit 220 includes an image input unit 221, an image processing unit 222, a detection processing unit 223, a volatile memory unit 224, a state measurement unit 225, and a control unit 226.

The image input unit 221 receives input of the video signal from the imaging unit 210 on the basis of a control signal from the control unit 226, and sequentially stores each frame of a corresponding image in the volatile memory unit 224.

The image processing unit 222 performs various types of image processing on the image stored in the volatile memory unit 224 on the basis of a control signal from the control unit 226. Specifically, the image processing unit 222 performs distortion correction on the image and performs development processing for object recognition. Each frame of the image subjected to such image processing is sequentially stored into the volatile memory unit 224.

The detection processing unit 223 performs object detection processing and object recognition processing on each frame of the image stored in the volatile memory unit 224 on the basis of a control signal from the control unit 226. Specifically, the detection processing unit 223 detects and recognizes an object around the vehicle 1 appearing in each frame of the image using trained data stored in the non-volatile memory unit 230. The processing result (recognition result) of the detection processing unit 223 is output, as appropriate, to the HMI 31 (Fig. 1) or the like via the control unit 226.

The volatile memory unit 224 includes, for example, a synchronous dynamic random access memory (SDRAM) or the like, and temporarily stores each frame of the image. Each frame of the image stored in the volatile memory unit 224 is read by the image processing unit 222 or the detection processing unit 223 as appropriate.

The state measurement unit 225 measures a state of the system for the automated driving and supplies state information indicating the state of the system to the control unit 226. Specifically, the state measurement unit 225 measures a temperature of a chip for recognition processing of recognizing an object around the vehicle 1, that is, the image recognition chip by which the recognition processing unit 220 is implemented. Note that the state measurement unit 225 may measure not only the temperature of the image recognition chip but also a temperature of a peripheral portion of the image recognition chip. Moreover, the state measurement unit 225 may measure not only the temperature of the image recognition chip, but also a temperature of a main large scale integration (LSI) such as an image sensor included in the camera 51 or a temperature of a peripheral portion of the main LSI. Temperature information indicating the measured temperature of the chip is supplied to the control unit 226 as the state information.

The control unit 226 includes a CPU and the like, and outputs a control signal to control the operation of each unit of the imaging unit 210 and the recognition processing unit 220. For example, the control unit 226 controls the operation of the imaging unit 210 and the operation of the detection processing unit 223 on the basis of vehicle information indicating a state of each unit of the vehicle 1, the surroundings of the vehicle 1, and the like. Furthermore, the control unit 226 determines the state of the system on the basis of the state information from the state measurement unit 225, and determines the automated driving level in accordance with the determination result.

The control unit 226 includes a recognition control unit 251, a state determination unit 252, a level determination unit 253, and an information generation unit 254.

The recognition control unit 251 outputs a control signal to the detection processing unit 223 to control the object detection processing and the object recognition processing by the detection processing unit 223.

The state determination unit 252 determines whether or not the system is in a preliminary state where there is a high probability that an abnormality will occur in the system (recognition processing unit 220) on the basis of the state information from the state measurement unit 225. That is, the state determination unit 252 determines whether or not an abnormality is predicted to occur in the system for the automated driving. Specifically, a determination as to whether or not the system is in the preliminary state is made on the basis of whether or not the temperature of the chip exceeds a threshold temperature.

In a case where the state determination unit 252 determines that the system is in the preliminary state, that is, in a case where an abnormality is predicted to occur in the system for the automated driving, the level determination unit 253 determines whether to shift or maintain the automated driving level of the vehicle 1 on the basis of the response from the driver. What has been determined (shift of the automated driving level or maintenance of the automated driving level) is supplied to the driving control unit 240 as control information.

The information generation unit 254 generates presentation information to be presented to the driver on the basis of the determination result from the state determination unit 252. For example, in a case where the state determination unit 252 determines that the system is in the preliminary state, the information generation unit 254 generates, as the presentation information, shift confirmation information for urging the driver to make a shift of the automated driving level. The generated presentation information is output to the HMI 31 (Fig. 1) or the like.

The non-volatile memory unit 230 corresponds to the storage unit 28 of the vehicle control system 11 in Fig. 1, and stores setting data used by each unit of the recognition processing unit 220. The setting data stored in the non-volatile memory unit 230 includes trained data used for the recognition processing that is performed by the recognition processing unit 220.

The driving control unit 240 corresponds to the travel assistance/automated driving control unit 29 of the vehicle control system 11 in Fig. 1, and controls the automated driving of the vehicle 1. Specifically, the driving control unit 240 performs control to shift or maintain the automated driving level on the basis of the control information from the control unit 226.

Note that the vehicle control system 200 is not limited to the configuration illustrated in Fig. 3, and may adopt any configuration. For example, the units of the recognition processing unit 220 may be dispersedly provided in a plurality of chips (devices), or some of the units may be provided in the imaging unit 210. Furthermore, the vehicle control system 200 may include a recognition processing device including the recognition processing unit 220 and the non-volatile memory unit 230, and the imaging unit 210. Moreover, the vehicle control system 200 may be configured in its entirety as a single device such as one front camera.

### (Outline of operation of vehicle control system)

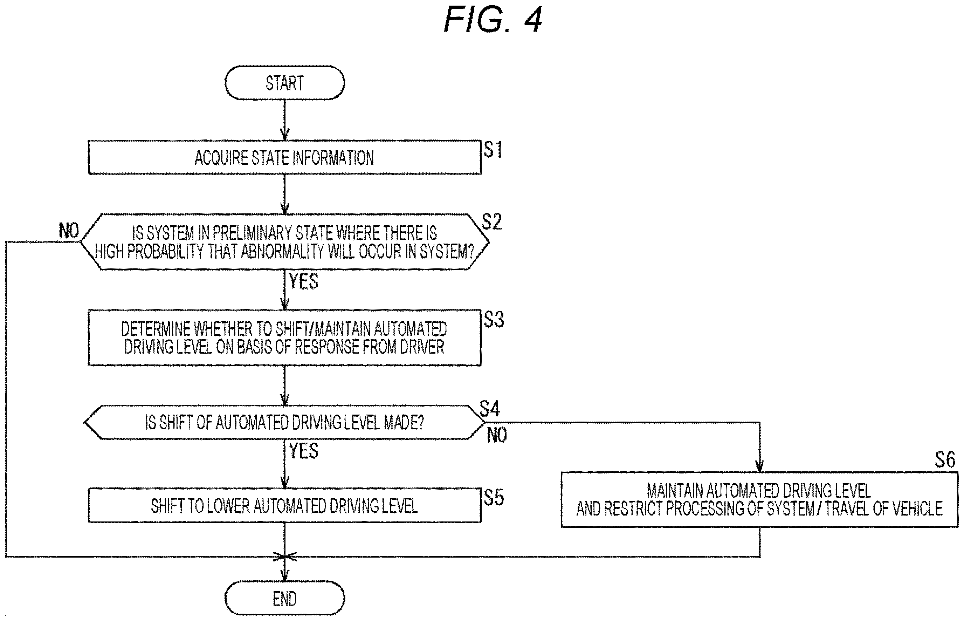

Next, an outline of an operation of the vehicle control system 200 in Fig. 3 will be described with reference to a flowchart in Fig. 4. The processing illustrated in Fig. 4 is performed, for example, at predetermined regular time intervals while the vehicle 1 is traveling at a certain automated driving level.

In step S1, the state determination unit 252 acquires the state information from the state measurement unit 225.

In step S2, the state determination unit 252 determines whether or not the system is in the preliminary state where there is a high probability that an abnormality will occur in the system (recognition processing unit 220). In a case where it is determined in step S2 that the system is in the preliminary state, the processing proceeds to step S3.

At this time, the presentation information (shift confirmation information) generated by the information generation unit 254 is presented to the driver. The driver confirms the shift confirmation information to determine whether or not to perform an input operation for a shift of the automated driving level on the vehicle control system 200.

In step S3, the level determination unit 253 determines whether to shift or maintain the automated driving level of the vehicle 1 on the basis of whether or not the response from the driver (input operation) has been detected.

In step S4, the level determination unit 253 determines whether or not the shift of the automated driving level has been determined in response to the detection of the response from the driver.

In a case where it is determined in step S4 that the shift of the automated driving level has been determined, control information indicating the shift of the automated driving level is supplied to the driving control unit 240, and the processing proceeds to step S5.

In step S5, the driving control unit 240 controls the automated driving level of the vehicle 1 to make a shift from the current automated driving level to a lower automated driving level.

On the other hand, in a case where it is determined in step S4 that the shift of the automated driving level has not been determined, the automated driving level is determined to be maintained, control information indicating the maintenance of the automated driving level is supplied to the driving control unit 240, and the processing proceeds to step S6.

In step S6, while the driving control unit 240 maintains the automated driving level on the basis of restriction information, the level determination unit 253 restricts at least one of the processing of the system or the travel of the vehicle. Specifically, on the basis of the restriction imposed by the level determination unit 253, the recognition control unit 251 reduces the load of the recognition processing, and the driving control unit 240 decelerates the vehicle 1.

Note that, in a case where it is determined in step S2 that the system is not in the preliminary state, steps S3 to S5 or to step S6 are skipped, and the automated driving of the vehicle 1 is continued with the automated driving level maintained.

Through the above processing, in a case where an abnormality is predicted to occur in the system for the automated driving, whether to shift or maintain the automated driving level is determined on the basis of the response from the driver. It is therefore possible to enable more suitable continuation of the automated driving without disabling the processing function for sensing and the like that are indispensable for the automated driving.

### <4. Details of operation of vehicle control system>

Hereinafter, details of the operation of the vehicle control system 200 to which the present technology is applied will be described.

### (Relationship between operation mode and automated driving level)

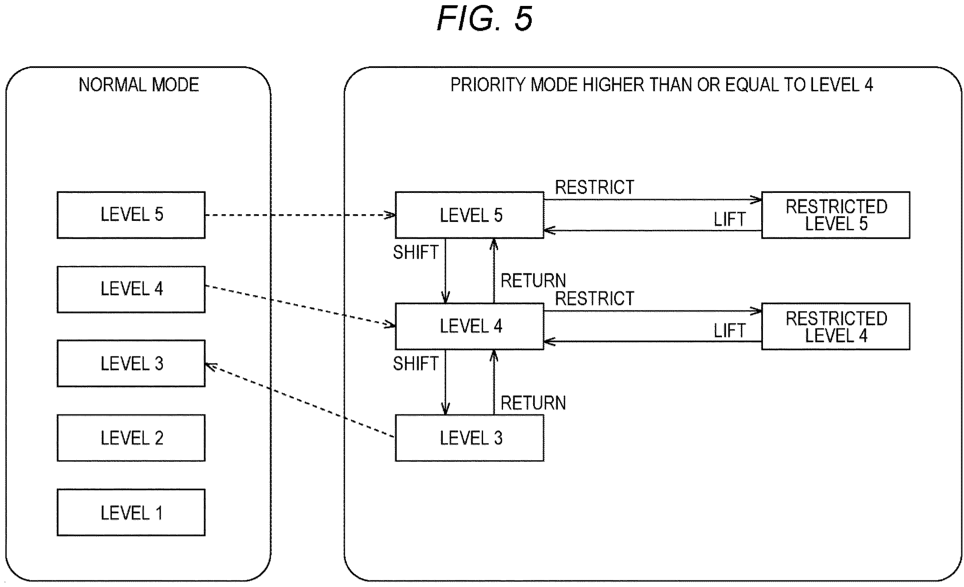

First, a relationship between the operation mode of the vehicle control system 200 and the automated driving level will be described with reference to Fig. 5.

In the vehicle control system 200 to which the present technology is applied, a normal mode and a priority mode higher than or equal to the level 4 are defined as operation modes for the automated driving.

In the normal mode, the driver makes a decision to set the automated driving level to any one of the level 1 to the level 5.

As described above, at the levels 1 and 2, the driver takes on primary responsibility for driving, which is defined as driver assistance. The level 1 is a level at which the system takes on a function of assisting in either the steering operation or the acceleration/deceleration, and a level 2 is a level at which the system takes on a function of assisting in both the steering operation and the acceleration/deceleration.

At the levels 3, 4, and 5, the system takes on primary responsibility for driving, which is defined as automated driving. The levels 3 and 4 are levels at which the system takes on a function of controlling everything under specific conditions. At the level 3, it is, however, necessary for the driver to take control in an emergency, whereas at the level 4, it is not necessary for the driver to take control. The level 5 is a level at which the system takes on a fully automated driving feature that allows the system to control everything under all conditions.

On the other hand, in the priority mode higher than or equal to the level 4, the continuation of the automated driving at the level 4 or higher as the automated driving level is prioritized. A mode transition from the normal mode to the priority mode higher than or equal to the level 4 is made, for example, when the driver gives an instruction for switching to the priority mode higher than or equal to the level 4 during the automated driving at the level 4 or 5 in the normal mode.

In the priority mode higher than or equal to the level 4, in a case where the temperature of the chip for the recognition processing exceeds the threshold temperature while the vehicle 1 is traveling at the level 4 or higher, the driver is urged to make the shift to the level 3. Specifically, in a case where the temperature of the chip exceeds the threshold temperature while the vehicle 1 is traveling at the level 4, the shift to the level 3 is urged. Furthermore, in a case where the temperature of the chip exceeds the threshold temperature while the vehicle 1 is traveling at the level 5, the shift to level 3 through the shift to the level 4 is urged.

Even in a case where after the shift to the level 3 is made on the basis of the response from the driver, the temperature of the chip falls below the threshold temperature, the return to the level 4 or higher is urged. In a case where the driver accepts the return to the level 4 or higher, the return to the level 4 is made or the return to the level 5 through the return to the level 4 is made; on the other hand, in a case where the driver rejects the return to the level 4 or higher, a transition to the normal mode (level 3) is made.

Furthermore, in a case where the driver does not accept the shift to the level 3 such as a case where there is no response from the driver, the processing of the system and the travel of the vehicle are restricted, so that the travel at the level 4 or level 5 is maintained (restricted level 4 or restricted level 5). In this state, in a case where the temperature of the chip falls below the threshold temperature, the restriction on the restricted level 4 or the restricted level 5 is lifted.

### (Relationship between temperature of chip and automated driving level)

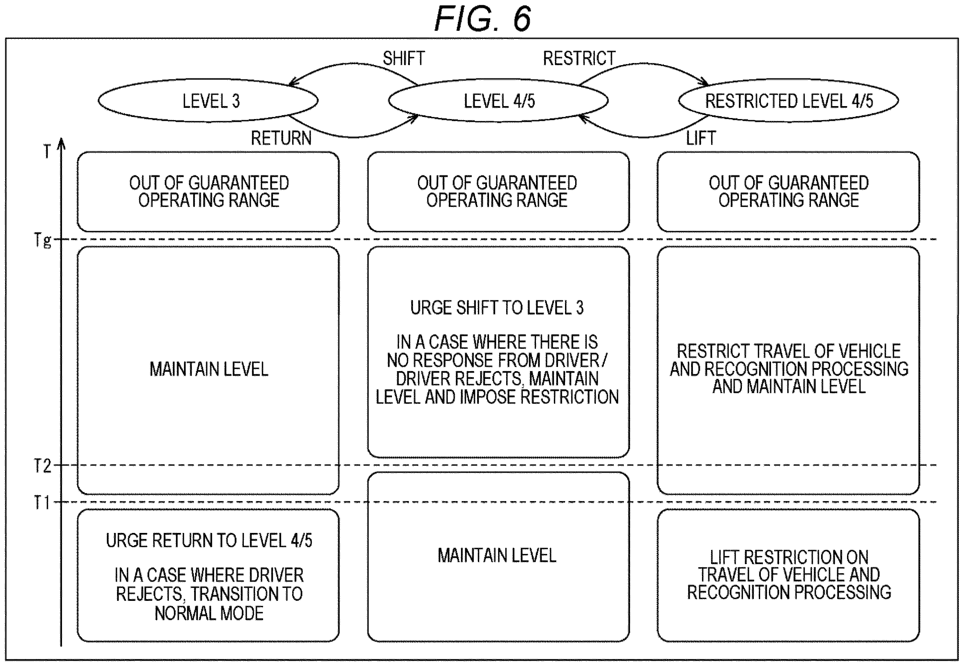

Next, a relationship between the temperature of the chip and the automated driving level in the priority mode higher than or equal to the level 4 will be described with reference to Fig. 6.

In Fig. 6, as the operation of the system based on the temperature of the chip represented by the vertical axis, an operation at the level 3, an operation at the level 4 or level 5, and an operation at the restricted level 4 or restricted level 5 are illustrated in this order from the left.

As illustrated at the center of the drawing, in a case where the temperature of the chip is lower than a temperature threshold T2 during the operation at the level 4 or level 5, the level is maintained. In a case where the temperature of the chip becomes higher than or equal to the temperature threshold T2, the shift to the level 3 is urged. Note that, in a case where the system operates at the level 5, the shift to the level 4 is made while the temperature of the chip is between a temperature threshold T1 and the temperature threshold T2, and then, when the temperature of the chip becomes higher than or equal to the temperature threshold T2, the shift to level 3 is urged.

That is, as illustrated at the left of the drawing, in a case where the shift to the level 3 is made, when the temperature of the chip is higher than the temperature threshold T1, the level is maintained. In a case where the temperature of the chip is lower than the temperature threshold T1, the return to the level 4 or level 5 is urged. Here, as for the return to the level 5, the shift to the level 4 is made first, and then the shift from the level 4 to the level 5 is made after a lapse of a predetermined time from the shift to the level 4. Note that a direct shift from the level 3 to the level 5 may be made without going through the shift to the level 4. Furthermore, in a case where the driver rejects the return to the level 4 or the level 5, the operation mode transitions from the priority mode higher than or equal to the level 4 to the normal mode.

Furthermore, in a case where the temperature of the chip becomes higher than or equal to the temperature threshold T2, and there is no response from the driver or the driver rejects the shift to the level 3 although the shift to the level 3 has been urged, the travel of the vehicle and the recognition processing are restricted with the level maintained.

That is, as illustrated at the right of the drawing, when the temperature of the chip is higher than the temperature threshold T1 at the restricted level 4 or the restricted level 5, the travel of the vehicle and the recognition processing are restricted with the level maintained. In a case where the temperature of the chip becomes lower than the temperature threshold T1, the restriction on the travel of the vehicle and the recognition processing is lifted.

In the example in Fig. 6, a difference is provided between the temperature threshold T1 and the temperature threshold T2 so that level shift/return and restriction/lifting according to the temperature of the chip become a hysteresis transition. Furthermore, at any level, in a case where the temperature of the chip exceeds a guaranteed operating temperature Tg, the system falls outside a guaranteed operating range, and the recognition processing is disabled by a fail-safe feature or the like.

Note that, in a case where an ADAS/AD alternative system is available for use as the system that is out of the guaranteed operating range, the recognition processing is disabled, and then the alternative system performs an avoidance maneuver (minimum risk maneuver: MRM). On the other hand, in a case where the alternative system is not available, the avoidance maneuver (MRM) is performed first, and then the recognition processing is disabled.

### (flow of operation in priority mode higher than or equal to level 4)

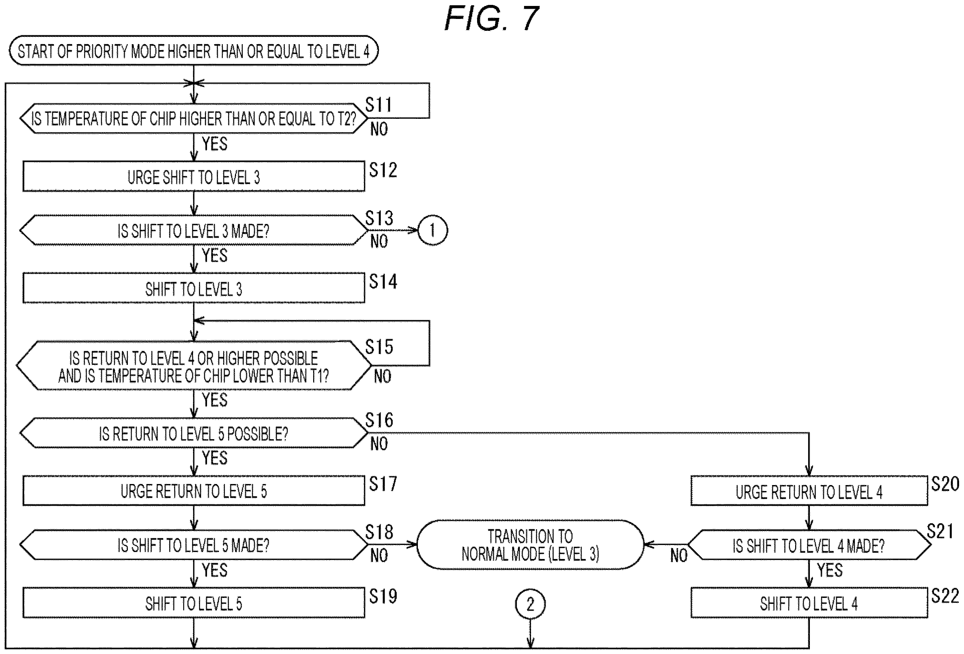

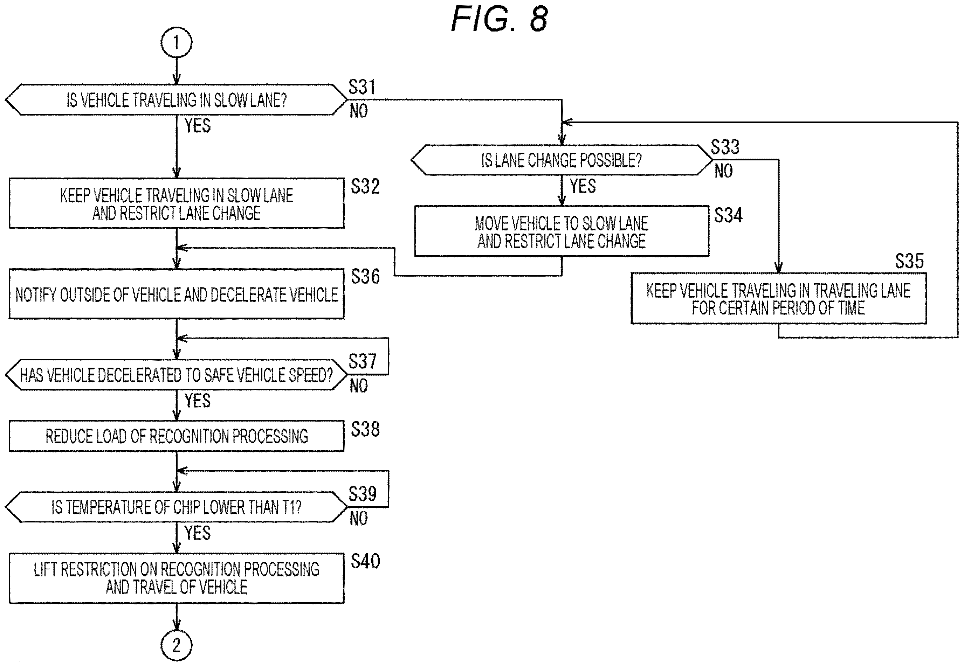

Here, a flow of how the vehicle control system 200 operates in the priority mode higher than or equal to the level 4 will be described with reference to the flowcharts in Figs. 7 and 8. The processing in Figs. 7 and 8 is performed, for example, at predetermined regular time intervals while the vehicle 1 is traveling in the priority mode higher than or equal to the level 4.

In step S11, the state determination unit 252 determines whether or not the temperature of the chip is higher than or equal to the temperature threshold T2 on the basis of the temperature information supplied as the state information from the state measurement unit 225.

In a case where it is determined that the temperature of the chip is lower than the temperature threshold T2, step S11 is repeated, and in a case where it is determined that the temperature of the chip is higher than or equal to the temperature threshold T2, the processing proceeds to step S12. Note that in a case where the vehicle 1 is traveling at the level 5, the shift to the level 4 is made while the temperature of the chip is between the temperature threshold T1 and the temperature threshold T2, and then a determination as to whether or not the temperature of the chip is higher than or equal to the temperature threshold T2 is made.

In step S12, the information generation unit 254 generates shift confirmation information for urging the driver to make the shift to the level 3 as presentation information to be presented to the driver, thereby urging the driver to make the shift to the level 3.

In step S13, the level determination unit 253 determines whether or not to make the shift to the level 3 on the basis of the response from the driver to the shift confirmation information.

In a case where it is determined in step S13 that the shift to the level 3 is made on the basis of an input operation for the shift to the level 3 performed by the driver or the like, control information indicating the shift to level 3 is supplied to the driving control unit 240, and the processing proceeds to step S14.

In step S14, the driving control unit 240 performs control to shift the automated driving level of the vehicle 1 to the level 3.

After the start of the automated driving at the level 3, the state determination unit 252 determines in step S15 whether or not the shift to the level 4 or higher is possible and whether or not the temperature of the chip is lower than the temperature threshold T1 on the basis of the temperature information from the state measurement unit 225. Here, whether or not the return to the level 4 or higher is possible is determined on the basis of whether or not a specific condition (travel area) where the features of the level 4 are enabled is satisfied.

In a case where it is determined that the return to the level 4 or higher is not possible or the temperature of the chip is not lower than the temperature threshold T1, step S15 is repeated. In a case where it is determined that the return to the level 4 or higher is possible and the temperature of the chip is lower than the temperature threshold T1, the processing proceeds to step S16.

In step S16, the state determination unit 252 determines whether or not the return to the level 5 is possible. In a case where it is determined that the return to the level 5 is possible, the processing proceeds to step S17.

In step S17, the information generation unit 254 generates return confirmation information for urging the driver to make the return to the level 5 as presentation information to be presented to the driver, thereby urging the driver to make the return to the level 5.

In step S18, the level determination unit 253 determines whether or not to make the shift to the level 5 on the basis of the response from the driver to the return confirmation information.

In a case where it is determined in step S18 that the shift to the level 5 is made on the basis of an input operation for the shift to the level 5 performed by the driver or the like, control information indicating the shift to the level 5 is supplied to the driving control unit 240, and the processing proceeds to step S19.

In step S19, the driving control unit 240 performs control to shift the automated driving level of the vehicle 1 to the level 5. Here, the shift to the level 4 is made first, and then the shift from the level 4 to the level 5 may be made after a lapse of a predetermined time from the shift to the level 4, or the direct shift from the level 3 to the level 5 may be made without going through the level 4. Thereafter, the processing returns to step S11, and the subsequent processing is repeated.

On the other hand, in a case where it is determined in step S16 that the return to the level 5 is not possible, the processing proceeds to step S20.

In step S20, the information generation unit 254 generates return confirmation information for urging the driver to make the return to the level 4 as presentation information to be presented to the driver, thereby urging the driver to make the return to the level 4.

In step S21, the level determination unit 253 determines whether or not to make the shift to the level 4 on the basis of the response from the driver to the return confirmation information.

In a case where it is determined in step S21 that the shift to the level 4 is made on the basis of an input operation for the shift to the level 4 performed by the driver or the like, control information indicating the shift to the level 4 is supplied to the driving control unit 240, and the processing proceeds to step S22.

In step S22, the driving control unit 240 performs control to shift the automated driving level of the vehicle 1 to the level 4. Thereafter, the processing returns to step S11, and the subsequent processing is repeated.

Furthermore, in step S18, in a case where the driver rejects the shift to the level 5 by, for example, not performing an input operation for the shift to the level 5, the operation mode of the vehicle control system 200 transitions to the normal mode (level 3).

Similarly, in step S21, in a case where the driver rejects the shift to the level 4 by, for example, not performing an input operation for the shift to the level 4, the operation mode of the vehicle control system 200 transitions to the normal mode (level 3).

Then, in step S13, in a case where the response from the driver is not detected such as a case where the driver rejects the shift to the level 3 by, for example, not performing an input operation for the shift to the level 3, the level determination unit 253 determines to maintain the level 4 or the level 5 and restricts the processing of the system (recognition processing) and the travel of vehicle 1. That is, a shift to the restricted level 4 or the restricted level 5 is made, and the processing proceeds to step S31 in Fig. 8.

In step S31, the driving control unit 240 determines whether or not the vehicle 1 is traveling in a slow lane on the basis of the vehicle information indicating the state of each unit of the vehicle 1, the surroundings of the vehicle 1, and the like.

In a case where it is determined in step S31 that the vehicle 1 is traveling in a slow lane, the processing proceeds to step S32, and the driving control unit 240 controls the automated driving of the vehicle 1 so as to restrict a lane change while keeping the vehicle 1 traveling in the current travel lane.

On the other hand, in a case where it is determined in step S31 that the vehicle 1 is not traveling in a slow lane, the processing proceeds to step S33, and the driving control unit 240 determines whether or not to a lane change to the slow lane is possible on the basis of the vehicle information.

In a case where it is determined in step S33 that the lane change to the slow lane is possible, the processing proceeds to step S34, and the driving control unit 240 controls the automated driving of the vehicle 1 so as to cause the vehicle 1 to move to the slow lane and restrict a lane change.

On the other hand, in a case where it is determined in step S33 that the lane change to the slow lane is not possible, the processing proceeds to step S35, and the driving control unit 240 controls the automated driving of the vehicle 1 so as to keep the vehicle 1 traveling in the current travel lane for a certain period of time. Thereafter, the processing returns to step S33, and the subsequent processing is repeated.

In step S36 subsequent to step S32 or step S34, the driving control unit 240 makes a notification to the outside of the vehicle by, for example, causing hazard lights to flash, and decelerates the vehicle 1.

In step S37, the driving control unit 240 determines whether or not the vehicle 1 has decelerated to a safe vehicle speed on the basis of the vehicle information. Step S37 is repeated until it is determined that the vehicle has decelerated to the safe vehicle speed, and when it is determined that the vehicle has decelerated to the safe vehicle speed, the vehicle information at that time is supplied to the control unit 250, and the processing proceeds to step S38.

The safe vehicle speed in this context refers to a speed set in advance in accordance with a road on which the vehicle 1 travels, and is set on the basis of, for example, a legal speed limit. Furthermore, the safe vehicle speed may be adjusted in accordance with an environment where the vehicle 1 travels. For example, in a case where the vehicle 1 is traveling on a congested road, the vehicle speed may be adjusted to such an extent that a distance from another vehicle is kept constant, or in a case of bad weather such as rainy weather, the vehicle speed may be adjusted to a speed lower than the set vehicle speed.

In step S38, the recognition control unit 251 reduces the load of the recognition processing on the detection processing unit 223 on the basis of the vehicle information from the driving control unit 240.

Specifically, the recognition control unit 251 reduces the load of the recognition processing by reducing a recognition frame rate for the images captured by the imaging unit 210 in accordance with the reduced vehicle speed indicated by the vehicle information.

Moreover, during the recognition processing, the recognition control unit 251 reduces the number of image pyramids, which are image groups having resolutions different stepwise from each other, so as to reduce the load of the recognition processing. In the recognition processing using the image pyramid, processing of performing a coarse search with a low-resolution image, narrowing a search range on the basis of the search result, and further searching the narrowed search range with a high-resolution image is repeatedly performed.

Here, details of the processing in a case where the recognition frame rate is reduced will be described.

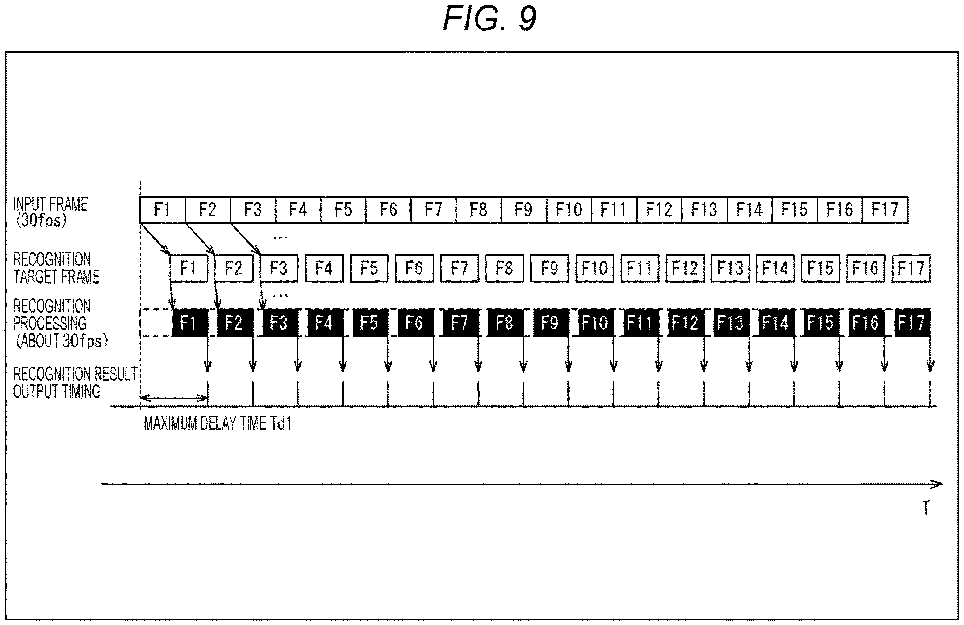

Fig. 9 is a diagram for describing a normal recognition frame rate.

Fig. 9 illustrates respective timings of an input frame from the imaging unit 210, a recognition target frame, and recognition processing with respect to a time axis T.

In the example in Fig. 9, input frames F1 to F17 from the imaging unit 210 are input to the recognition processing unit 220 at a frame rate of 30 fps.

The input frames F1 to F17 input to the recognition processing unit 220 are subjected, as the recognition target frames, to image processing such as distortion correction by the image processing unit 222, and are sequentially stored into the volatile memory unit 224.

Then, the detection processing unit 223 performs recognition processing on the input frames F1 to F17 stored in the volatile memory unit 224 at a recognition frame rate of about 30 fps.

As described above, in a case where the recognition frame rate is made equal to the frame rate of the input frames, CPU usage by the recognition processing unit 220 (chip) increases, and the power consumption increases accordingly. This also leads to an increase in the temperature of the chip.

In the example in Fig. 9, a time from the input of each input frame to the output timing of a corresponding recognition result is a maximum delay time Td1.

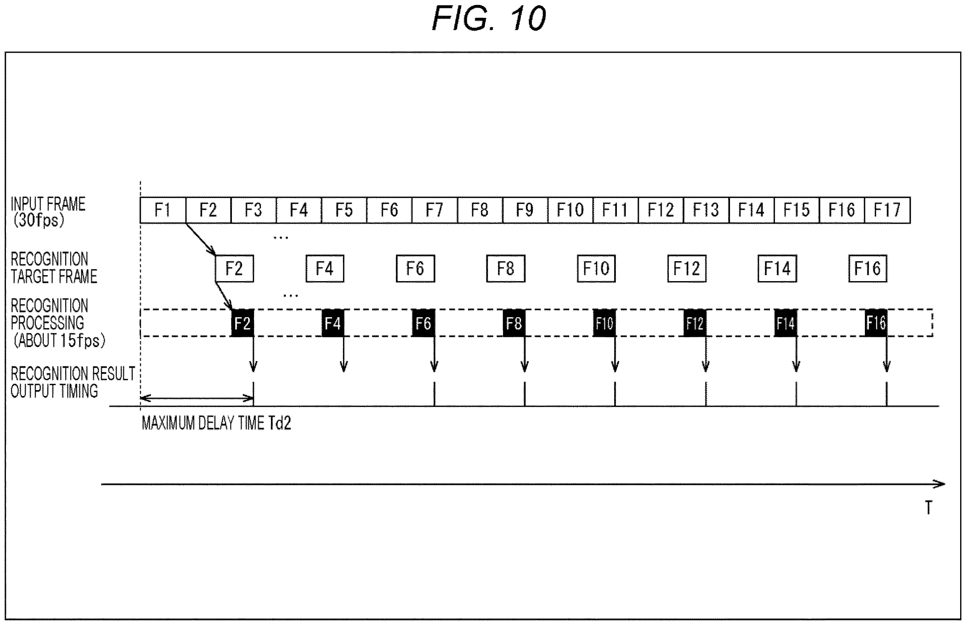

Fig. 10 is a diagram for describing a recognition frame rate under a reduced load.

As with Fig. 9, Fig. 10 illustrates the respective timings of the input frame from the imaging unit 210, the recognition target frame, and the recognition processing with respect to the time axis T.

In the example in Fig. 10, however, every other frame out of the input frames F1 to F17 input to the recognition processing unit 220, that is, the input frames F2, F4, ..., and F16, is sequentially stored into the volatile memory unit 224 as the recognition target frames.

Then, the detection processing unit 223 performs recognition processing at a recognition frame rate of about 15 fps on the input frames F2, F4, ..., and F16 stored in the volatile memory unit 224.

As described above, reducing the recognition frame rate to approximately 1/2 of the frame rate of the input frames leads to a decrease in the CPU usage by the recognition processing unit 220 (chip) and a decrease in the power consumption. It is therefore possible to suppress an increase in the temperature of the chip.

Furthermore, in the example in Fig. 10, a time from the input of each input frame to the output timing of the recognition result is a maximum delay time Td2 that is longer than the maximum delay time Td1 in the example in Fig. 9.

In a case where the recognition frame rate is reduced, the maximum delay time becomes longer as described above, so that control timing of emergency braking based on the recognition result is delayed, for example. On the other hand, in order to avoid an accident, it is necessary to reduce the vehicle speed. In a case where the vehicle speed is reduced, it is not necessary to perform the recognition processing on a distant object, so that it is possible to reduce the number of image pyramids. For example, in a case where the recognition frame rate in the system is F_rec [f/s] and the maximum speed of the vehicle 1 under safe driving is V_max [km/h], when the vehicle 1 travels at the actual travel speed reduced to V_max/p [km/h], the recognition frame rate can be reduced to F_rec/p [f/s].

Furthermore, in a case where the detection processing unit 223 (recognition processing unit 220) performs pattern recognition using decision trees as the recognition processing, the recognition control unit 251 may reduce the load of the recognition processing by narrowing down the decision trees for the recognition processing.

Returning to the flowchart in Fig. 8, in step S39, the state determination unit 252 determines whether or not the temperature of the chip is lower than the temperature threshold T1 on the basis of the temperature information from the state measurement unit 225.

In a case where it is determined that the temperature of the chip is not lower than the temperature threshold T1, step S39 is repeated. In a case where it is determined that the temperature of the chip is lower than the temperature threshold T1, the processing proceeds to step S40.

In step S40, the level determination unit 253 lifts the restriction on the processing of the system (recognition processing) and the restriction on the travel of the vehicle 1. Thereafter, the processing returns to step S11 in Fig. 7, and the subsequent processing is repeated.

Through the above processing, in a case where a malfunction is predicted to occur due to thermal runaway caused by an increase in the temperature of the chip, whether to shift or maintain the automated driving level is determined on the basis of the response from the driver. It is therefore possible to enable more suitable continuation of the automated driving without disabling the processing function for sensing and the like that are indispensable for the automated driving.

### <5. Modifications and specific examples>

Hereinafter, modifications and specific examples of the above-described embodiment will be described.

### (Avoidance maneuver)

In the above-described embodiment, whether to shift or maintain the automated driving level of the vehicle 1 is determined on the basis of whether or not the system (recognition processing unit 220) is in the preliminary state where there is a high probability that an abnormality will occur in the system.

However, in a case where the probability of occurrence of an abnormality is higher than in the preliminary state, a risk of not ensuring safe travel of the vehicle 1 increases. In such a case, an avoidance maneuver to pull the vehicle 1 over to a road shoulder and slow down or stop the vehicle 1 may be performed.

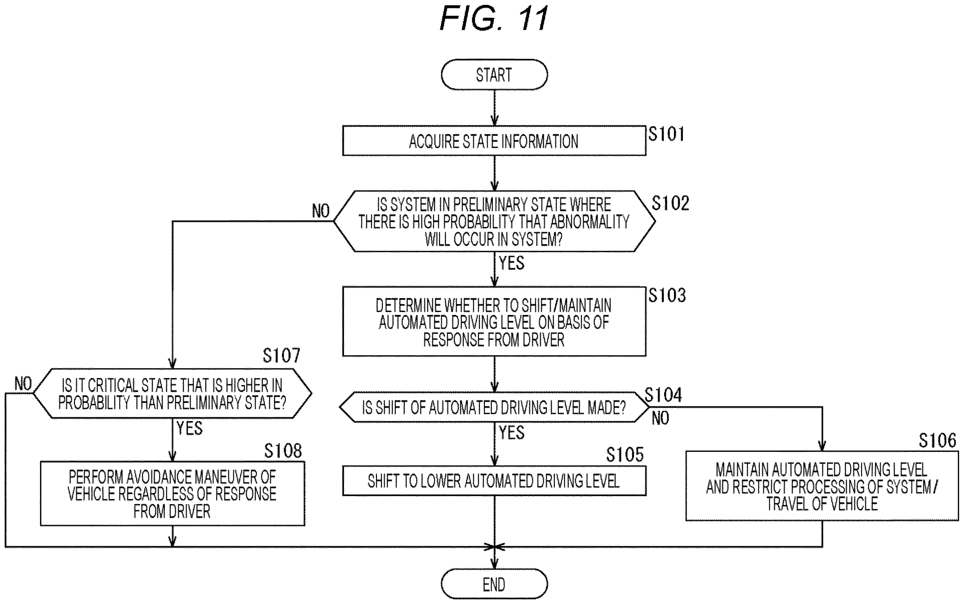

Here, an outline of an operation of the vehicle control system 200 in Fig. 3 configured to cause the vehicle 1 to perform the avoidance maneuver will be described with reference to a flowchart in Fig. 11.

Note that the processing in steps S101 to S106 in the flowchart in Fig. 11 is similar to the processing in steps S1 to S6 in the flowchart in Fig. 4, and therefore the description of the processing will be omitted.

That is, in a case where it is determined in step S102 that the system is not in the preliminary state, the processing proceeds to step S107, and the state determination unit 252 determines whether or not the system is in a critical state where the probability of occurrence of an abnormality is higher than in the preliminary state. In a case where it is determined in step S107 that the system is in the critical state, the processing proceeds to step S108.

In step S108, the driving control unit 240 performs control to cause the vehicle 1 to perform the avoidance maneuver regardless of the response from the driver. At this time, the information generation unit 254 may generate presentation information indicating that the system is in the critical state and present the presentation information to the driver.

On the other hand, in a case where it is determined in step S107 that the system is not in the critical state, step S108 is skipped, and the automated driving of the vehicle 1 is continued with the automated driving level maintained.

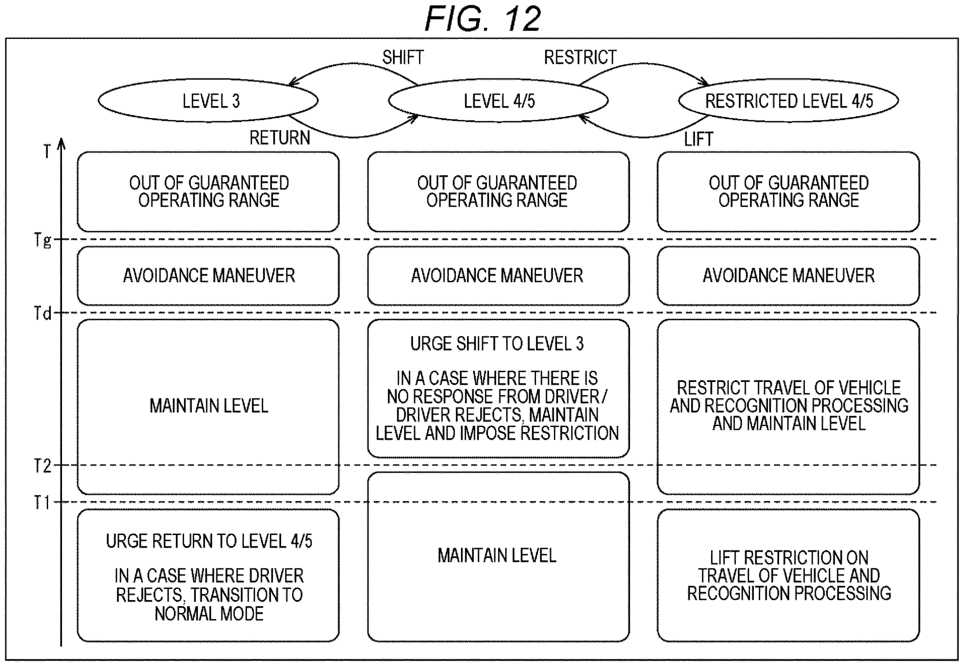

In this case, for example, in the relationship between the temperature of the chip and the automated driving level described with reference to Fig. 6, in a case where the temperature of the chip exceeds a critical temperature Td at any level, the vehicle 1 performs the avoidance maneuver to pull over to a road shoulder and slows down or stops as illustrated in Fig. 12. At this time, since the avoidance maneuver has been already started, even in a case where the temperature of the chip exceeds the guaranteed operating temperature Tg, the recognition processing can be performed as usual until the avoidance maneuver is completed.

### (Operation of vehicle during avoidance maneuver)

As described with reference to Figs. 6 and 12, in a case where the temperature of the chip exceeds the guaranteed operating temperature Tg or the critical temperature Td, the vehicle 1 performs the avoidance maneuver.

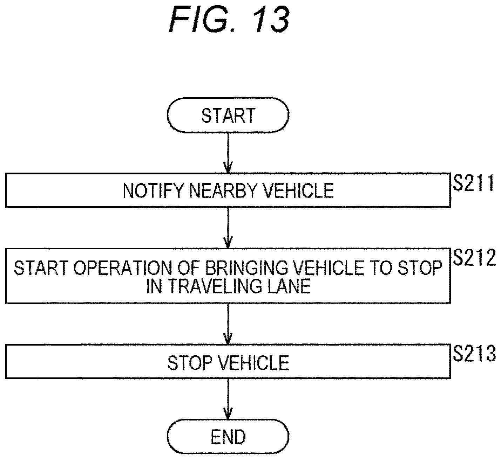

Fig. 13 is a flowchart for describing a flow (processing) of an operation of the vehicle 1 during the avoidance maneuver. The processing in Fig. 13 can be performed in a case where the temperature of the chip exceeds the guaranteed operating temperature Tg, for example, as described with reference to Fig. 6.

When the avoidance maneuver is started, the vehicle 1 (driving control unit 240) notifies a nearby vehicle of the start of the avoidance maneuver using, for example, hazard lights, a car horn, V2X communication, or the like in step S211.

In step S212, the driving control unit 240 starts an operation of bringing the vehicle 1 to a stop in the travel lane by decelerating the vehicle 1.

Thereafter, in step S213, when the vehicle 1 stops, the avoidance maneuver is completed.

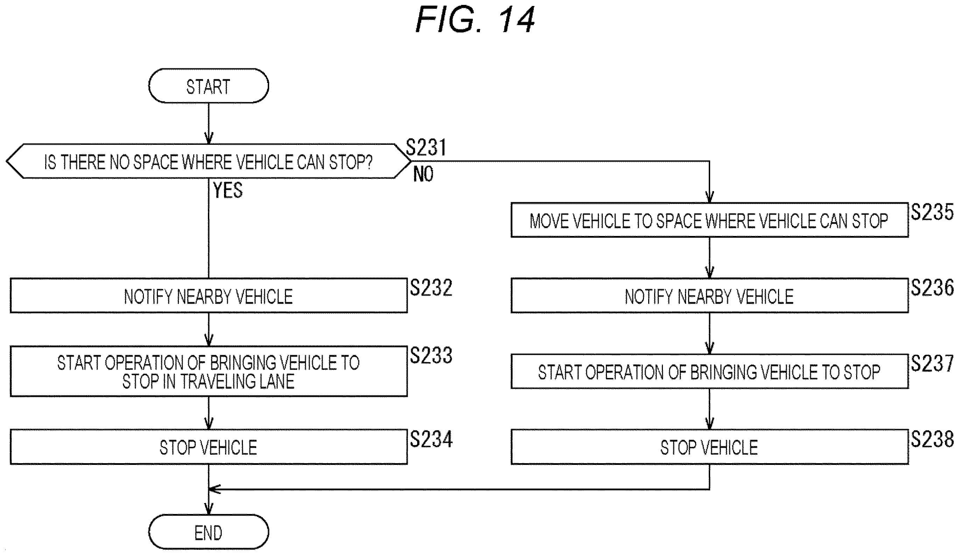

Fig. 14 is a flowchart for describing another example of the flow (processing) of the operation of the vehicle 1 during the avoidance maneuver. The processing in Fig. 14 can be performed in a case where the temperature of the chip exceeds the critical temperature Td, for example, as described with reference to Fig. 12.

Note that the processing in steps S232 to S234 in the flowchart in Fig. 14 is similar to the processing in steps S211 to S213 in the flowchart in Fig. 13, and therefore the description of the processing will be omitted.

When the avoidance maneuver is started, the vehicle 1 (driving control unit 240) determines whether or not there is a space where the vehicle 1 can stop on the basis of the vehicle information indicating the surroundings of the vehicle 1 and the like in step S231. Here, for example, a space where the vehicle can stop other than the travel lane, such as a road shoulder or a roadside space, is searched for.

In a case where it is determined in step S231 that there is no space where the vehicle can stop, the notification to the nearby vehicle and the operation of bringing the vehicle to a stop in the travel lane are performed in steps S232 to S234.

On the other hand, in a case where it is determined in step S231 that there is a space where the vehicle 1 can stop, the processing proceeds to step S235, and the driving control unit 240 moves the vehicle 1 to the space where the vehicle 1 can stop.

In step S236, the driving control unit 240 notifies the nearby vehicle of the start of the avoidance maneuver using, for example, hazard lights, a car horn, V2X communication, or the like.

In step S237, the driving control unit 240 starts, by decelerating the vehicle 1, the operation of bringing the vehicle 1 to a stop in the found space where the vehicle 1 can stop.

Thereafter, in step S238, when the vehicle 1 stops, the avoidance maneuver is completed.

As described above, the vehicle 1 can perform the avoidance maneuver.

### (Recognition processing using image pyramid)

Here, recognition processing using an image pyramid that is performed by the vehicle control system 200 to which the present technology is applied will be described.

### (1) Outline of image pyramid

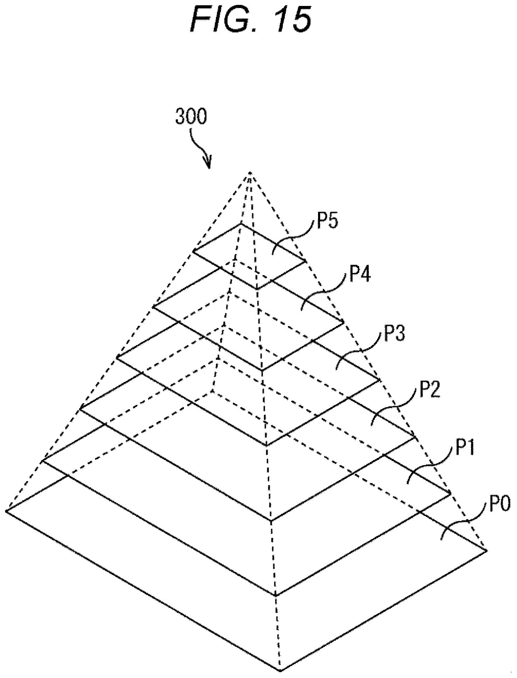

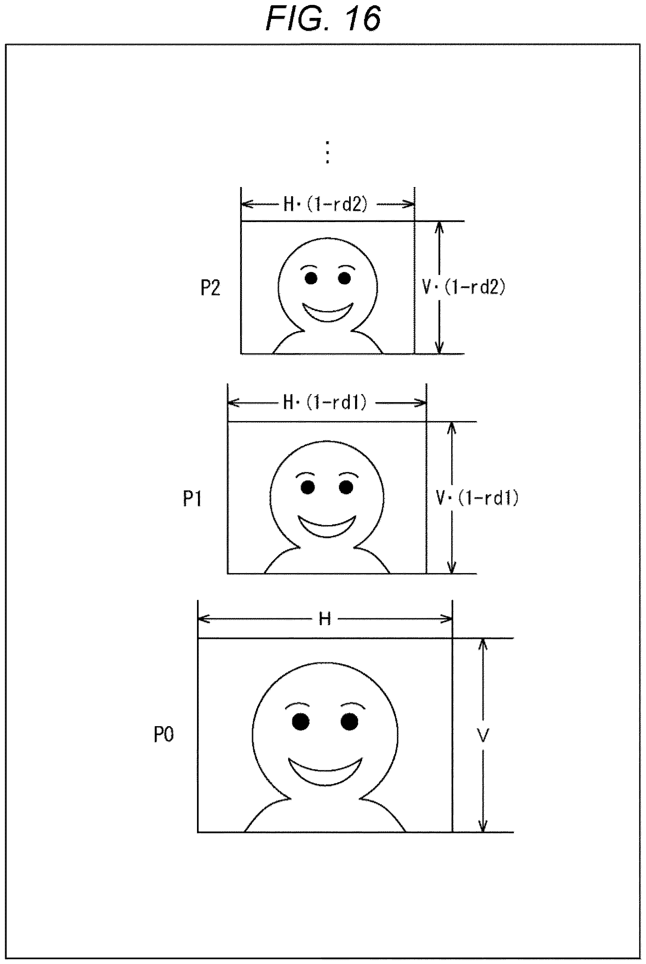

An outline of the image pyramid will be described with reference to Figs. 15 and 16.

Fig. 15 illustrates six images of a zero-th layer image P0, a first layer image P1, a second layer image P2, a third layer image P3, a fourth layer image P4, and a fifth layer image P5.

Here, the zero-th layer image P0 to the fifth layer image P5 have the same image content but are different in scale (size and resolution) from each other. In Fig. 15, an image that is largest in scale among the zero-th layer image P0 to the fifth layer image P5 is set as the zero-th layer image P0. The image scale decreases in the order of the first layer image P1, the second layer image P2, the third layer image P3, the fourth layer image P4, and the fifth layer image P5.

Fig. 16 illustrates the zero-th layer image P0, the first layer image P1, and the second layer image P2 extracted from Fig. 15. Assuming that the number of horizontal pixels × the number of vertical pixels of the zero-th layer image P0 is denoted as H × V, the first layer image P1 is an image, obtained by reducing the size of the zero-th layer image P0 by a predetermined reduction ratio rd1 (rd1 < 1), with a scale of the number of horizontal pixels × the number of vertical pixels = H·(1 - rd1) × V·(1 - rd1). Furthermore, the second layer image P2 is an image with a scale of the number of horizontal pixels × the number of vertical pixels = H·(1 - rd2) × V·(1 - rd2) obtained by reducing the size of the zero-th layer image P0 by a predetermined reduction ratio rd2 larger than the predetermined reduction ratio rd1.

As described above, the scale decreases in the order of the zero-th layer image P0 to the fifth layer image P5. Therefore, it is assumed that such layer images are sequentially stacked on top of each other to form a layered structure with the zero-th layer image P0 as the bottom layer. Then, it can be considered that a quadrangular pyramid, that is, a pyramid shape, is formed as illustrated in Fig. 15 by surfaces in contact with the outer peripheries of the layer images. As described above, the pyramid shape formed by the layer images stacked on top of each other to form a layered structure is referred here to as image pyramid 300. In the image pyramid 300 formed as described above, the scale of each image having the same image content varies in a manner that depends on a corresponding height position in the pyramid. Incidentally, the higher the position in the image pyramid 300, the smaller the image scale.

The image pyramid 300 as described above is formed with the zero-th layer image as a base. That is, the input image (original frame) is set as the zero-th layer image. In addition, for example, images obtained by performing reduction processing on the original frame using predetermined reduction ratios different from each other are referred to as first layer images P1 to fifth layer images P5, respectively.

Here, the image pyramid 300 includes six layer images, the zero-th layer image P0 to the fifth layer image P5, but this is merely an example. That is, the number of image layers forming the image pyramid 300 is not particularly limited as long as the number is greater than or equal to 2, and is only required to be set in accordance with the scale of the input image (original frame) supported by the actual system, the processing capacity of hardware and software of the system, the required recognition processing performance, and the like.

### (2) First example of recognition processing using image pyramid

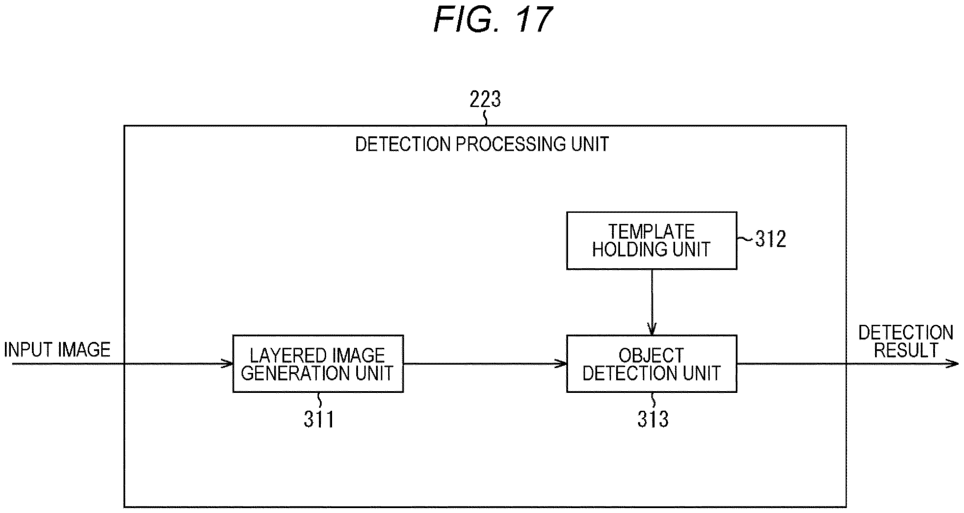

Fig. 17 is a block diagram illustrating a first configuration example of the detection processing unit 223 that performs the recognition processing using the image pyramid.

As illustrated in Fig. 17, the detection processing unit 223 includes a layered image generation unit 311, a template holding unit 312, and an object detection unit 313.

The layered image generation unit 311 generates a plurality of images (hereinafter, referred to as layered images) forming the image pyramid described with reference to Figs. 15 and 16 on the basis of the input image (original frame), and supplies the images to the object detection unit 313.

The template holding unit 312 holds template images for various objects that can be recognition targets. The template images held in the template holding unit 312 are read, as needed, by the object detection unit 313.

The object detection unit 313 performs matching processing (template matching) on each of the layered images using the template images read from the template holding unit 312 to detect a predetermined object for each of the layered images, and outputs the detection result (recognition result).

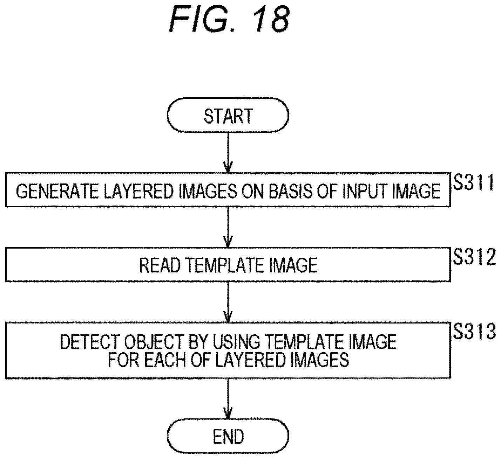

Next, a flow of recognition processing that is performed by the detection processing unit 223 in Fig. 17 will be described with reference to a flowchart in Fig. 18. The processing in Fig. 18 is performed every time the input image (original frame) is input to the detection processing unit 223.

In step S311, the layered image generation unit 311 generates the layered images on the basis of the input image (original frame).

In step S312, the object detection unit 313 reads the template images from the template holding unit 312.

In step S313, the object detection unit 313 detects an object for each of the layered images by using the template images read from the template holding unit 312.

For example, in a case where the vehicle 1 travels under a restricted travel condition with speed limitation, the speed of the vehicle 1 is low, so that the recognition processing is not performed for a distant object, but performed for a nearby object. Specifically, in a case where the zero-th layer image P0 to the fifth layer image P5 are generated by the layered image generation unit 311, the detection processing is not performed on the zero-th layer image P0 to the second layer image P2 during the restricted travel, and the detection processing is performed on the third layer image P3 to the fifth layer image P5 that are smaller in scale. It is therefore possible to reduce the load of the recognition processing.

### (3) Second example of recognition processing using image pyramid

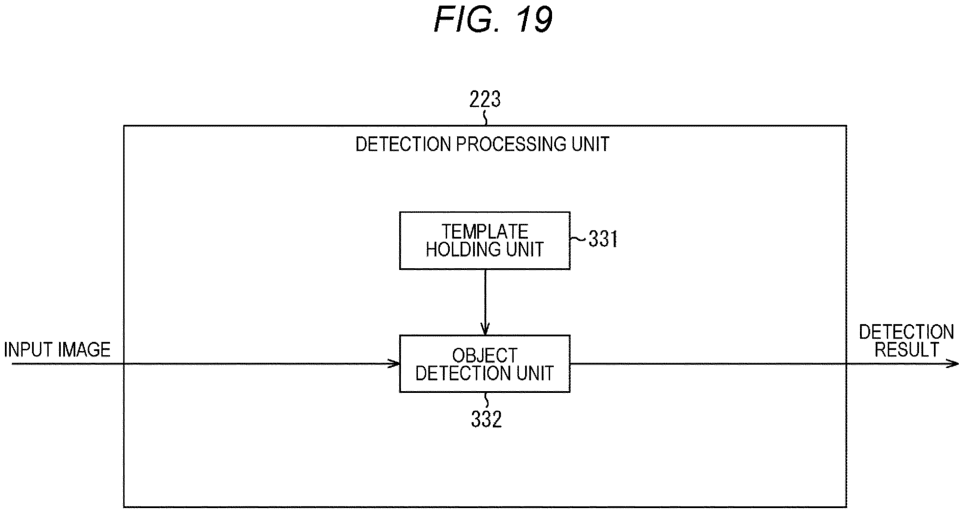

Fig. 19 is a block diagram illustrating a second configuration example of the detection processing unit 223 that performs the recognition processing using the image pyramid.

As illustrated in Fig. 19, the detection processing unit 223 includes a template holding unit 331 and an object detection unit 332.

The template holding unit 331 holds, as the template images for various objects that can be recognition targets, a plurality of template images (hereinafter, referred to as layered templates) different in scale corresponding to the layered images of the above-described pyramid image. For example, the template holding unit 331 holds (n + 1) template images including a zero-th layer template as a template image that is the largest in scale, and a first layer template, a second layer template, ..., and an n-th layer template in descending order of the image scale. The layered templates held in the template holding unit 331 are read, as needed, by the object detection unit 332.

The object detection unit 332 performs matching processing on the input image (original frame) using the layered templates read from the template holding unit 331 to detect a predetermined object, and outputs the detection result (recognition result).

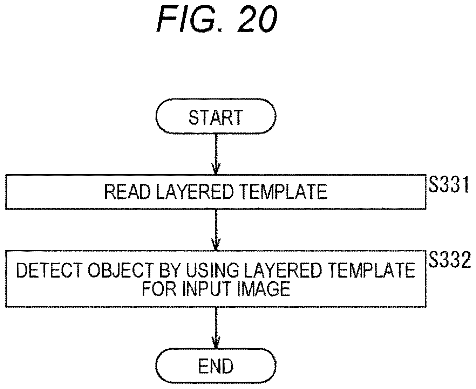

Next, a flow of recognition processing that is performed by the detection processing unit 223 in Fig. 19 will be described with reference to a flowchart in Fig. 20. The processing in Fig. 20 is performed every time the input image (original frame) is input to the detection processing unit 223.

In step S331, the object detection unit 332 reads the layered templates from the template holding unit 331.

In step S332, the object detection unit 332 detects an object for the input image by using the layered templates read from the template holding unit 331.

For example, in a case where the vehicle 1 travels under a restricted travel condition with speed limitation, the speed of the vehicle 1 is low, so that the recognition processing is not performed for a distant object, but performed for a nearby object. Specifically, in a case where the zero-th layer template to the fifth layer template are held in the template holding unit 331, the detection processing using the third layer template to the fifth layer template is not performed, and the detection processing using the zero-th layer template to the second layer template that are larger in scale is performed during the restricted travel. It is therefore possible to reduce the load of the recognition processing.

### (Change of recognition processing according to restricted level)

In a case where the automated driving at the restricted level 4 or the restricted level 5 is performed, the recognition processing that is performed by the recognition processing unit 220 may be changed.

Specifically, when the automated driving level shifts to the restricted level 4 or the restricted level 5, a signal (vehicle information) indicating that the restricted travel with speed limitation is performed is input from the driving control unit 240 to the control unit 226 (recognition control unit 251). The recognition control unit 251 changes the recognition processing (recognition algorithm) in accordance with the input signal. For example, the recognition processing that is performed by the recognition processing unit 220 (detection processing unit 223) may be changed to recognition processing in which the recognition frame rate is reduced, or may be changed to recognition processing in which a restriction is imposed on the use of the layered images or the use of the layered templates. Alternatively, the recognition processing that is performed by the recognition processing unit 220 (detection processing unit 223) may be changed to recognition processing adapted to the travel conditions at the restricted level 4 or the restricted level 5.

### (Another example of state information)

In the above-described embodiment, the state information indicating the state of the system for the automated driving is the temperature information indicating the temperature of the chip for the recognition processing of recognizing an object around the vehicle 1, but the state information is not limited to such temperature information. Specifically, as a parameter used to determine whether or not the system is in the preliminary state where there is a high probability that an abnormality will occur in the system, not only the temperature information indicating the temperature of the chip for the recognition processing, but also intensity information indicating electromagnetic wave intensity/electromagnetic field intensity inside the recognition sensor such as the camera 51 or outside the recognition sensor, temperature information indicating the temperature of the main LSI such as an image sensor included in the camera 51, and the like can be used.

For example, the state measurement unit 225 may measure electromagnetic wave intensity/electromagnetic field intensity received by the chip (recognition processing unit 220) for the recognition processing of recognizing an object around the vehicle 1, and intensity information indicating the measured electromagnetic wave intensity/electromagnetic field intensity may be supplied to the control unit 226 as the state information. The state measurement unit 225 that measures the electromagnetic wave intensity/electromagnetic field intensity can include, for example, an antenna disposed inside the recognition sensor such as the camera 51 or an antenna disposed outside the recognition sensor.

In this case, the state determination unit 252 determines whether or not the system is in the preliminary state where there is a high probability that an abnormality will occur in the system (recognition processing unit 220) on the basis of whether or not the electromagnetic wave intensity/electromagnetic field intensity indicated by the intensity information exceeds a threshold intensity.

In this case, it is assumed that level transition similar to the level transition according to the temperature of the chip for the recognition processing is performed. Specifically, the temperature of the chip represented by the vertical axis in Fig. 6 or 12 is defined as electromagnetic wave intensity/electromagnetic field intensity [gauss (G), ampere per meter (A/m), volt per meter (V/m)], and the temperature thresholds T1 and T2, the guaranteed operating temperature Tg, and the critical temperature Td are replaced with intensity thresholds G1 and G2, a guaranteed operating intensity Gg, and a critical intensity Gd.

For example, when the electromagnetic wave intensity/electromagnetic field intensity becomes higher than or equal to the intensity threshold G2 during travel at the automated driving level of the level 4 or the level 5, the shift to the level 3 is urged. Furthermore, at any level, in a case where the electromagnetic wave intensity/electromagnetic field intensity exceeds the guaranteed operating intensity Gg, the system falls outside the guaranteed operating range. Moreover, as in Fig. 12, at any level, in a case where the electromagnetic wave intensity/electromagnetic field intensity exceeds the critical intensity Gd, the vehicle 1 starts the avoidance maneuver. As described above, in a case where the electromagnetic wave intensity/electromagnetic field intensity is at a certain level, level transition similar to the level transition in a case where the temperature of the chip for the recognition processing increases is performed.

Furthermore, the temperature of the main LSI such as an image sensor included in the camera 51 or the temperature of the peripheral portion of the main LSI may be measured, and whether or not the system is in the preliminary state where there is a high probability that an abnormality will occur in the system may be determined on the basis of whether or not the temperature exceeds a threshold temperature.

Also in this case, it is assumed that level transition similar to the level transition according to the temperature of the chip for the recognition processing is performed. Specifically, the temperature of the chip represented by the vertical axis in Fig. 6 or 12 is the temperature of the main LSI such as an image sensor.

Note that, in a case where the temperature of the image sensor increases and exceeds or may exceed the guaranteed operating temperature, and the automated driving at the restricted level 4 or the restricted level 5 is performed, an imaging frame rate of the image sensor is reduced, and the recognition processing that is performed by the recognition processing unit 220 (detection processing unit 223) is changed to recognition processing adapted to a recognition frame rate corresponding to the reduced imaging frame rate. Moreover, in the recognition processing, recognition processing in which a restriction is imposed on the use of the layered images or the use of the layered templates may be performed.

As described above, even in a case where the temperature of the main LSI such as an image sensor or the temperature of the peripheral portion of the main LSI increases, level transition similar to the level transition in a case where the temperature of the chip for the recognition processing increases is performed.

Even with such a configuration, it is possible to enable more suitable continuation of the automated driving without disabling the processing function for sensing and the like that are indispensable for the automated driving.

### <6. Configuration example of computer>

The series of the processing described above can be performed by hardware or can be performed by software. In a case where the series of processing is performed by software, a program constituting the software is installed on a computer built into dedicated hardware or a general-purpose personal computer from a program recording medium, or the like.

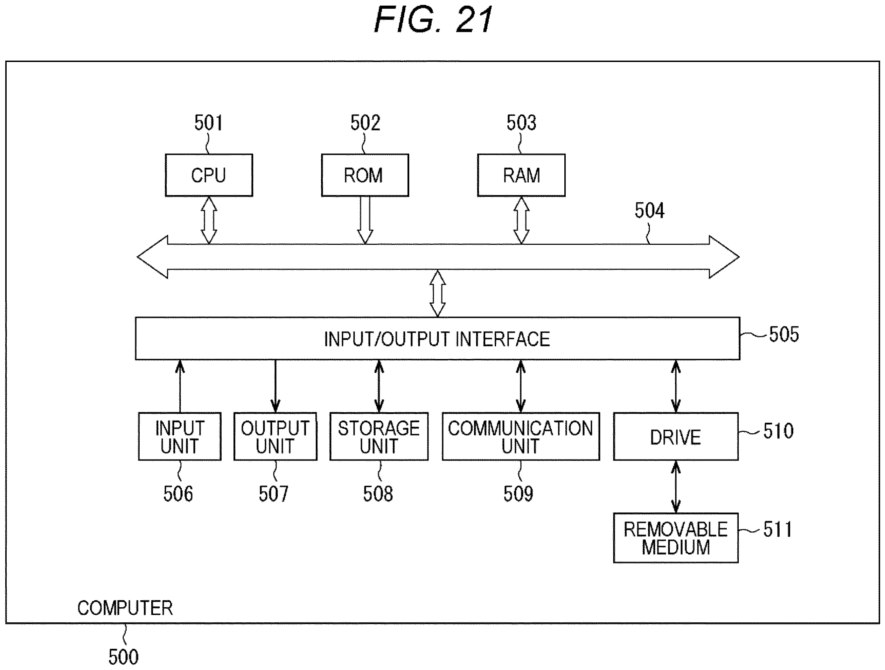

Fig. 21 is a block diagram illustrating a configuration example of hardware of a computer that performs the above-described series of processing in accordance with a program.

The vehicle control system 200 described above is implemented by a computer 500 having a configuration illustrated in Fig. 21.

A CPU 501, a ROM 502, and a RAM 503 are connected to one another over a bus 504.

An input/output interface 505 is further connected to the bus 504. An input unit 506 including a keyboard, a mouse, or the like, and an output unit 507 including a display, a speaker, or the like are connected to the input/output interface 505. Furthermore, a storage unit 508 including a hard disk, a non-volatile memory, or the like, a communication unit 509 including a network interface and the like, and a drive 510 that drives a removable medium 511 are connected to the input/output interface 505.

In the computer 500 configured as described above, for example, the CPU 501 loads a program stored in the storage unit 508 into the RAM 503 via the input/output interface 505 and the bus 504 and executes the program to perform the above-described series of processing.

For example, the program to be executed by the CPU 501 is recorded in the removable medium 511, or provided via a wired or wireless transmission medium such as a local area network, the Internet, or digital broadcasting, and then installed in the storage unit 508.

Note that, the program to be executed by the computer 500 may be a program in accordance with which processing is performed in time series in the order described herein, or may be a program in accordance with which processing is performed in parallel or at necessary timing such as when a call is made, and the like.

Herein, a system means an assembly of a plurality of components (such as devices and modules (parts)) and it does not matter whether or not all the components are in the same housing. Therefore, a plurality of devices stored in different housings and connected via a network and one device in which a plurality of modules is stored in one housing are both systems.

The embodiment of the present technology is not limited to the above-described embodiment, and various modifications may be made without departing from the spirit of the present technology.

Furthermore, the effects described herein are merely examples and are not limited, and there may be other effects.

Moreover, the present technology may have the following configurations.
(1) An information processing device including:
   a driving control unit configured to control automated driving of a vehicle;
   a state determination unit configured to determine, on the basis of state information indicating a state of a system for the automated driving, whether or not the system is in a preliminary state where there is a high probability that an abnormality will occur in the system; and
   a level determination unit configured to determine whether to shift or maintain an automated driving level on the basis of a response from a driver in a case where the system is determined to be in the preliminary state.
(2) The information processing device according to (1), in which
   the state information indicates a temperature of a chip for recognition processing of recognizing an object around the vehicle, and
   the state determination unit determines whether or not the system is in the preliminary state on the basis of whether or not the temperature exceeds a threshold temperature.
(3) The information processing device according to (1) or (2), in which
   while the vehicle is traveling at a first automated driving level, the level determination unit determines whether to make a shift to a second automated driving level lower than the first automated driving level or maintain the first automated driving level.
(4) The information processing device according to (1),
   further including an information generation unit configured to generate shift confirmation information for urging a shift of the automated driving level in a case where the system is determined to be in the preliminary state, in which
   the level determination unit determines whether to shift or maintain the automated driving level on the basis of a response from the driver to the shift confirmation information.
(5) The information processing device according to (4), in which
   the level determination unit determines to shift the automated driving level in a case where the response from the driver to the shift confirmation information is detected.
(6) The information processing device according to (5), in which
   in a case where the system is determined to be no longer in the preliminary state after the shift of the automated driving level, the information generation unit generates return confirmation information for urging a return to the automated driving level before the shift, and
   the level determination unit determines to return to the automated driving level before the shift on the basis of a response from the driver to the return confirmation information.
(7) The information processing device according to (4), in which
   in a case where the response from the driver to the shift confirmation information is not detected, the level determination unit determines to maintain the automated driving level and imposes a restriction on at least one of processing of the system or travel of the vehicle.
(8) The information processing device according to (7),
   including a recognition control unit configured to control recognition processing of recognizing an object around the vehicle on the basis of an image captured by a camera mounted on the vehicle, in which
   the recognition control unit reduces a load of the recognition processing on the basis of the restriction imposed by the level determination unit.
(9) The information processing device according to (8), in which
   the recognition control unit reduces the load of the recognition processing by reducing a recognition frame rate for the image.
(10) The information processing device according to (8), in which
   the recognition control unit reduces the load of the recognition processing by reducing a number of image pyramids for the recognition processing.
(11) The information processing device according to (8), in which
   the recognition control unit reduces the load of the recognition processing by narrowing down decision trees for the recognition processing.
(12) The information processing device according to any one of (8) to (11), in which
   the camera includes a front camera configured to capture the image with a front of the vehicle as an imaging range.
(13) The information processing device according to (7), in which
   the driving control unit controls deceleration of the vehicle on the basis of the restriction imposed by the level determination unit.
(14) The information processing device according to (13), in which
   the driving control unit controls the travel of the vehicle in a slow lane.
(15) The information processing device according to (7), in which
   in a case where the system is determined to be no longer in the preliminary state after the restriction is imposed by the level determination unit, the level determination unit lifts the restriction on the processing of the system and the travel of the vehicle.
(16) The information processing device according to any one of (1) to (15), in which
   the state determination unit determines whether or not the system is in a critical state higher in the probability than the preliminary state on the basis of the state information, and
   in a case where the system is determined to be in the critical state, the driving control unit performs an avoidance maneuver of the vehicle regardless of the response from the driver.
(17) The information processing device according to (1), in which
   the state information indicates electromagnetic wave intensity of a chip for recognition processing of recognizing an object around the vehicle, and
   the state determination unit determines whether or not the system is in the preliminary state on the basis of whether or not the electromagnetic wave intensity exceeds a threshold intensity.
(18) An information processing method including:
   by an information processing device,
   determining, on the basis of state information indicating a state of a system for automated driving of a vehicle, whether or not the system is in a preliminary state where there is a high probability that an abnormality will occur in the system; and
   determining whether to shift or maintain an automated driving level on the basis of a response from a driver in a case where the system is determined to be in the preliminary state.
(19) A vehicle control system including:
   a camera mounted on a vehicle;
   a driving control unit configured to control automated driving of the vehicle;
   a state determination unit configured to determine, on the basis of state information indicating a state of a system for the automated driving, whether or not the system is in a preliminary state where there is a high probability that an abnormality will occur in the system; and
   a level determination unit configured to determine whether to shift or maintain an automated driving level on the basis of a response from a driver in a case where the system is determined to be in the preliminary state.

### REFERENCE SIGNS LIST

- 1: Vehicle
- 11: Vehicle control system
- 51: Camera
- 73: Recognition processing unit
- 200: Vehicle control system
- 210: Imaging unit
- 220: Recognition processing unit
- 221: Image input unit
- 222: Image processing unit
- 223: Detection processing unit
- 224: Volatile memory unit
- 225: State measurement unit
- 226: Control unit
- 230: Non-volatile memory unit
- 240: Driving control unit
- 251: Recognition control unit
- 252: State determination unit
- 253: Level determination unit
- 254: Information generation unit

## Claims

1. An information processing device comprising:
a driving control unit configured to control automated driving of a vehicle;
a state determination unit configured to determine, on a basis of state information indicating a state of a system for the automated driving, whether or not the system is in a preliminary state where there is a high probability that an abnormality will occur in the system; and
a level determination unit configured to determine whether to shift or maintain an automated driving level on a basis of a response from a driver in a case where the system is determined to be in the preliminary state.

2. The information processing device according to claim 1, wherein
the state information indicates a temperature of a chip for recognition processing of recognizing an object around the vehicle, and
the state determination unit determines whether or not the system is in the preliminary state on a basis of whether or not the temperature exceeds a threshold temperature.

3. The information processing device according to claim 1, wherein
while the vehicle is traveling at a first automated driving level, the level determination unit determines whether to make a shift to a second automated driving level lower than the first automated driving level or maintain the first automated driving level.

4. The information processing device according to claim 1,
further comprising an information generation unit configured to generate shift confirmation information for urging a shift of the automated driving level in a case where the system is determined to be in the preliminary state, wherein
the level determination unit determines whether to shift or maintain the automated driving level on a basis of a response from the driver to the shift confirmation information.

5. The information processing device according to claim 4, wherein
the level determination unit determines to shift the automated driving level in a case where the response from the driver to the shift confirmation information is detected.

6. The information processing device according to claim 5, wherein
in a case where the system is determined to be no longer in the preliminary state after the shift of the automated driving level, the information generation unit generates return confirmation information for urging a return to the automated driving level before the shift, and
the level determination unit determines to return to the automated driving level before the shift on a basis of a response from the driver to the return confirmation information.

7. The information processing device according to claim 4, wherein
in a case where the response from the driver to the shift confirmation information is not detected, the level determination unit determines to maintain the automated driving level and imposes a restriction on at least one of processing of the system or travel of the vehicle.

8. The information processing device according to claim 7,
comprising a recognition control unit configured to control recognition processing of recognizing an object around the vehicle on a basis of an image captured by a camera mounted on the vehicle, wherein
the recognition control unit reduces a load of the recognition processing on a basis of the restriction imposed by the level determination unit.

9. The information processing device according to claim 8, wherein
the recognition control unit reduces the load of the recognition processing by reducing a recognition frame rate for the image.

10. The information processing device according to claim 8, wherein
the recognition control unit reduces the load of the recognition processing by reducing a number of image pyramids for the recognition processing.

11. The information processing device according to claim 8, wherein
the recognition control unit reduces the load of the recognition processing by narrowing down decision trees for the recognition processing.

12. The information processing device according to claim 8, wherein
the camera includes a front camera configured to capture the image with a front of the vehicle as an imaging range.

13. The information processing device according to claim 7, wherein
the driving control unit controls deceleration of the vehicle on a basis of the restriction imposed by the level determination unit.

14. The information processing device according to claim 13, wherein
the driving control unit controls the travel of the vehicle in a slow lane.

15. The information processing device according to claim 7, wherein
in a case where the system is determined to be no longer in the preliminary state after the restriction is imposed by the level determination unit, the level determination unit lifts the restriction on the processing of the system and the travel of the vehicle.

16. The information processing device according to claim 1, wherein
the state determination unit determines whether or not the system is in a critical state higher in the probability than the preliminary state on a basis of the state information, and
in a case where the system is determined to be in the critical state, the driving control unit performs an avoidance maneuver of the vehicle regardless of the response from the driver.

17. The information processing device according to claim 1, wherein
the state information indicates electromagnetic wave intensity of a chip for recognition processing of recognizing an object around the vehicle, and
the state determination unit determines whether or not the system is in the preliminary state on a basis of whether or not the electromagnetic wave intensity exceeds a threshold intensity.

18. An information processing method comprising:
by an information processing device,
determining, on a basis of state information indicating a state of a system for automated driving of a vehicle, whether or not the system is in a preliminary state where there is a high probability that an abnormality will occur in the system; and
determining whether to shift or maintain an automated driving level on a basis of a response from a driver in a case where the system is determined to be in the preliminary state.

19. A vehicle control system comprising:
a camera mounted on a vehicle;
a driving control unit configured to control automated driving of the vehicle;
a state determination unit configured to determine, on a basis of state information indicating a state of a system for the automated driving, whether or not the system is in a preliminary state where there is a high probability that an abnormality will occur in the system; and
a level determination unit configured to determine whether to shift or maintain an automated driving level on a basis of a response from a driver in a case where the system is determined to be in the preliminary state.
